(19) Europäisches Patentamt
European Patent Office
Office européen des brevets

(11) **EP 4 485 843 B1**

(12) **FASCICULE DE BREVET EUROPEEN**

(45) Date de publication et mention
de la délivrance du brevet:
**08.04.2026 Bulletin 2026/15**

(21) Numéro de dépôt: **24176603.9**

(22) Date de dépôt: **17.05.2024**

(51) Classification Internationale des Brevets (IPC):
*H04L 9/08* (2006.01)   *G01S 19/00* (2010.01)
*H04L 9/32* (2006.01)   *H04L 9/16* (2006.01)

(52) Classification Coopérative des Brevets (CPC):
**H04L 9/0872; G01S 19/16; G01S 19/43; H04L 9/16; H04L 9/3242**

(54) **CHIFFREMENT PAR CLÉS SPATIO-TEMPORELLES POUR AUTHENTIFICATION ET CRYPTAGE DES SYSTÈMES DE COMMUNICATION ET D'INFORMATION**

RAUM-ZEITLICHE SCHLÜSSELVERSCHLÜSSELUNG ZUR AUTHENTIFIZIERUNG UND VERSCHLÜSSELUNG VON KOMMUNIKATIONS- UND INFORMATIONSSYSTEMEN

SPATIO-TEMPORAL KEY ENCRYPTION FOR AUTHENTICATION AND ENCRYPTION OF COMMUNICATION AND INFORMATION SYSTEMS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.06.2023 FR 2306731**

(43) Date de publication de la demande:
**01.01.2025 Bulletin 2025/01**

(73) Titulaire: **TILT-GNSS SAS**
**26120 Upie Rhones-Alpes (FR)**

(72) Inventeur: **REVOL, Marc**
**26120 Upie (FR)**

(56) Documents cités:
**US-A1- 2014 368 380    US-A1- 2015 365 824**

## Description

### Résumé de l'invention

L'invention décrit un procédé d'authentification et de cryptage sans autorité tierce, dit de chiffrement spatio-temporel, appliqué pour la protection d'une information d'intérêt en vue de garantir l'origine et l'intégrité de son contenu dans un but d'enregistrement ou de transmission, basé sur le positionnement et la datation précise GNSS.

La démarche suivie s'inscrit dans une approche dite de « zéro confiance » (encore appelée « zero trust », en langue anglaise), appliquée à la protection de la confidentialité et de l'intégrité des données des systèmes d'information et de communication, qui, partant du constat que les pares-feux et protections d'accès ne sont jamais totalement étanches aux intrusions, recommande de favoriser les solutions d'authentification multifactorielles et de cryptage des informations, et de surveiller les atteintes à l'intégrité des données.

La solution selon l'invention permet de réaliser la protection et l'authentification des informations à leurs sources, quelle que soit la plate-forme de génération, sur la base de données cachées multi-dimensions liées à la position et à la date de création du document, exploitant des caractéristiques intermédiaires spécifiques au traitement des signaux GNSS et tirant profit de la protection d'accès aux signaux sécurisés diffusés par les systèmes GNSS mondiaux.

Une telle approche permet, sans infrastructure de sécurité dédiée supplémentaire, de protéger les données circulant dans le système d'information, et d'évaluer, n'importe où et n'importe quand, et à n'importe quel niveau du système, le risque de cybersécurité associé, en contrôlant la cohérence et l'intégrité des données contenues (authentification basée sur la position et le temps de l'information constituant la clé maitresse, chiffrage des données selon des clés dynamiques dérivées, traçabilité pour contrôle de la sécurité).

Tirant parti des différents niveaux de protection d'accès aux services de signaux GNSS, dits services de navigation, la solution offre différentes capacités de robustesse et de contrôle dont la complexité et la sécurité peuvent être adaptées en fonction du niveau de menaces, tout en minimisant l'impact sur les performances du réseau de communication.

### Domaine de l'invention

Le domaine de l'invention est relatif à l'authentification et à la protection d'informations d'intérêt à des fins d'enregistrement, à comprendre aussi bien au sens de référencement pour archivage, qu'au sens de transmission au travers d'un réseau de communication ou de serveurs informatiques.

Le terme « information d'intérêt » couvre toutes informations numériques destinées à être transmises, mémorisées ou référencées pour archivage, que ces informations soient échangées ponctuellement ou en continu, par exemple, des messages, des documents, des actes certifiés, des données personnelles ou destinées à un horodatage.

Le contexte d'emploi de l'invention concerne la protection de données, la certification d'enregistrements d'informations individuelles ou d'entreprises, ainsi que la traçabilité et le contrôle d'empreintes numériques cryptographiques intégrées dans l'information.

Le cadre de mise en œuvre est celui d'un environnement présentant un risque cyber susceptible d'entrainer des attaques sur l'intégrité des données (modification de leur contenu), sur l'identité de leur source (modification de l'origine des informations) ou encore sur la confidentialité de l'information (lecture non désirée par des tiers).

Les types de malveillances envisagées concernent la compromission de l'information et de sa source, telle l'identité, la date, le lieu, la signature et l'information d'intérêt, ainsi que la falsification de ces données.

L'invention propose une solution pour protéger les informations à la source, permettant de minimiser les contraintes sur les infrastructures de sécurité (réglementation des accès aux locaux et aux équipement) et ne nécessitant pas de privilèges d'accès spécifiques ou d'infrastructures de sécurité dédiées, en mettant à profit des caractéristiques spatio-temporelles toujours disponibles, singulières et non ambiguës, caractéristiques de la source au moment de la création de l'information à enregistrer ou à transmettre. L'information ainsi référencée et protégée à la source peut être échangée avec un minimum de risque d'altération ou d'observation dans des infrastructures peu sécurisées.

A ce titre, les constellations GNSS, peuvent être utilisées comme sources de référencement mondiales, disponibles en continu et en tous lieux, en vue de caractériser un évènement de manière unique selon un ensemble de paramètres multiples (dit multi-facteurs) et présentant de façon intrinsèque des niveaux de protection et d'authentification d'accès aux signaux, liés auxdits services de navigation GNSS délivrés par construction par les signaux.

De plus, du fait de la multiplicité des constellations et des bandes de fréquences utilisées, elles fournissent des sources indépendantes de signaux qui offrent une grande variété de conditions d'observation, susceptibles d'augmenter la disponibilité et la précision des caractéristiques utilisées pour le référencement. Gérées et garanties par différentes autorités, elles constituent un média de confiance, légal et pérenne, susceptible d'asseoir une solution de sécurisation des informations associée à la géolocalisation par satellites.

Un autre intérêt réside sur la large dissémination des équipements de géolocalisation que ce soit dans des cadres d'applications grand-public, professionnelles, pour les infrastructures critiques ou encore pour la sécurité et la défense.

**Problème technique**

Le problème technique consiste à utiliser des caractéristiques des signaux GNSS, uniques dans le temps et l'espace, pour authentifier et protéger une information d'intérêt à référencer.

Le principe de base consiste à lier de façon indissociable l'information d'intérêt contenue, avec un évènement spatio-temporel unique dont il sera possible de reconnaitre et d'identifier les caractéristiques.

L'approche consiste à encapsuler étroitement les données d'intérêt, échangées dans le système d'information, avec la date et la position précises et sécurisées de leur création, les informations de géolocalisation servant à identifier de manière unique un évènement.

Il est simple de réaliser le référencement d'un document pour son archivage (photographie, mesures, document, actes certifiés, ...) grâce aux informations de position et de temps fournies par un récepteur GNSS et d'un équipement en assurant la capture (appareil photographique, tachygraphe, ...) et de le conserver sur un Cloud, par exemple à des fins d'horodatage.

Cependant, si le fichier numérique contenant ces informations, dit conteneur par la suite, n'est pas sécurisé, il peut être facile pour des tiers d'accéder à l'information d'intérêt, voire de se l'approprier en changeant les informations d'identification de l'auteur ou de la date et du lieu, ou encore de falsifier l'information contenue.

Il est donc nécessaire que la solution mise en place permette d'assurer :

- L'identification sécurisée de création du conteneur
- L'authentification de la source par le destinataire
- L'intégrité des données d'intérêt contre la falsification par des tiers
- La confidentialité des données d'intérêt contre la divulgation par des tiers

Une simple capture des sorties de position et de datation GNSS ne peut fournir de telles capacités de protection sans impliquer l'utilisation de fonctions à sens unique pour réaliser le chiffrement et de fortes contraintes de gestion et de vérification des clés publiques-privées et des signatures électroniques via une infrastructure à clé privée (dit PKI en langue anglaise) pour réaliser un chiffrement symétrique ou asymétrique et une authentification à double contrôle à clés publique et privée.

L'objet de l'invention est d'apporter de telles capacités sans devoir mettre en place de telles infrastructures de sécurité, ni d'algorithme de cryptographie asymétrique, en s'appuyant sur les seules informations caractérisant les signaux satellites GNSS qui constituent des attributs uniques et spécifiques de l'émetteur du message, accessibles aux destinataires possédant les mêmes privilèges d'accès aux signaux.

Un dispositif apportant la preuve que la position et la date ne sont pas corrompues, peut éviter que des personnes falsifient l'information (la photographie) avec une intention malveillante.

**Etat de la technique antérieure**

Les techniques développées en communication pour protéger et authentifier des informations échangées entre fournisseur et destinataire de données confidentielles mettent classiquement en œuvre des méthodes de chiffrement à clés symétriques ou asymétriques publiques-privées, impliquant des infrastructures extérieures pour assurer la gestion des clés multi-utilisateurs et des autorités se portant garantes de la protection du secret.

Les procédés d'authentifications et de chiffrage/déchiffrage impliquent des échanges de clés et de signatures qui peuvent être observés, mêmes si les intrusions restent rares et l'affaire d'experts, les algorithmes de cryptage étant de plus en plus performants.

Cependant la génération des clés reste complexe et fait appel à des ressources de calcul conséquentes déportées ou non, ainsi qu'à des contraintes croissantes de cybersécurité pour assurer la protection des accès.

Les nouvelles recommandations de déploiement d'infrastructures de cybersécurité dites de « zéro confiance » (« Zero Trust », en langue anglaise) décrites par la publication NIST.SP.800-207 tendent à revisiter les approches traditionnelles de la cybersécurité standard basées sur la protection des accès aux infrastructures.

L'approche Zero Trust vise à déployer des solutions de sécurité suivant un « périmètre défini par logiciel » qui fournit un accès à privilèges aux utilisateurs humains et non humains, quels que soit leur emplacement géographique, le terminal utilisé, et quel que soit l'emplacement d'hébergement des données et des charges de travail.

Le brevet [D1] US 2015/365824 A1 (Gustafson Bo [US]; "Satellite based key agreement for authentication", date de publication 17 décembre 2015 (2015-12-17)) expose un algorithme d'échange de clés entre satellites et station sol en utilisant des informations partagées par deux partenaires (par exemple la distance ou le doppler). Il réalise une « mise en accord de clefs » reconstituées par calcul après échange des informations de position et de vitesse des plateformes, et non un « transport de clefs » qui ne dépendrait pas de grandeurs physiques partagées en clair, possiblement observables ou mesurables par des tiers,

Simultanément au développement des services basés sur le GNSS, de nouvelles menaces sont apparues, liées à la diffusion volontaire de fausses informations d'identification, en corrompant les sorties des récepteurs GNSS, par exemple relative à la position et à la datation d'un véhicule, ou encore, relatives au risque de leurrage des signaux GNSS reçus pouvant entrainer de fausses estimations par le récepteur utilisateur de la position et du temps, difficilement détectables par les utilisateurs.

Une approche de surveillance et contrôle de telles situations, récemment développée, consiste à transférer le signal Radiofréquence (RF) GNSS reçu par l'utilisateur à une station de traitement déportée ou à un serveur, afin de traiter les signaux des services de navigation GNSS règlementés ou de défense, disponibles en réception en parallèle des signaux de navigation ouverts.

L'accès à ces services de navigation étant réglementé et les codes des signaux étant très protégés, il est extrêmement difficile pour un tiers non accrédité d'y accéder pour les falsifier.

Une autorité habilitée peut donc vérifier par ce biais si les informations de position et de temps diffusées par les utilisateurs sont falsifiées et si les signaux reçus sont leurrés, réalisant ainsi une authentification de l'identification.

Un tel principe est décrit par le brevet [D2] EP 2 674 779 (Marc Revol & Al; « Système de radionavigation par satellite à architecture déportée », date de dépôt: 13.06.2013)

Ce même principe est décrit dans le brevet [D3] US 2014/368380 A1 (Revol Marc & Al; "Satellite radio navigation system with remote architecture", date de publication 18 décembre 2014 (2014-12-18))Cependant, un inconvénient de cette approche réside dans l'impact sur le débit de communication de la transmission des signaux GNSS à large bande.

Le brevet [D4] EP 2 790 035 (Marc Revol; « Procédé et dispositif de compression d'un signal de radio-navigation large bande, procédé et dispositif associés de calcul de la fonction de corrélation du code d'étalement dudit signal compressé » , date de dépôt: 07.03.2014) propose une approche de compression des signaux GNSS, encore appelée Compressive Sensing en langue anglaise, permettant de réduire la bande passante utilisée pour la transmission des signaux GNSS tout en maintenant leurs capacités de transfert de temps et de positionnement.

Sur le même sujet, les publications suivantes sont relatives aux capacités de traitement et de surveillance des signaux GNSS à distance :

- [D5] ( Alexander Rugamer, Manuel Stahl, Ivana Lukcin, Gunter Rohmer - Fraunhofer IIS Nuremberg, Germany, «Privacy Protected Localization and Authentication of Georeferenced Measurements using Galileo PRS", publié dans les Proceedings of IEEE/ION PLANS 2014 May 5 - 8, 2014*)* décrit comment les utilisateurs ordinaires de Galileo peuvent bénéficier d'une localisation protégée par la confidentialité et de l'authentification des mesures géoréférencées à l'aide du service Signal Public Réglementé (PRS) Galileo.

- [D6] (Marc Revol - Thales Avionics, « Distant positioning for GNSS securing", publié dans les Proceeding de ENC 2015- session 08- April 8-10, 2015*)* décrit les moyens permettant l'utilisation de signaux GPS ou Galileo cryptés (par nature plus résistants aux interférences que les signaux civils) pour un positionnement sécurisé et robuste avec de fortes contraintes d'intégration (police, radio militaire et gouvernementale).

**[D7]** **(**Marc Revol - Thales Avionics, "Compressing a wide band radio-navigation signal and method for calculating the correlation function for distant positioning" Navitech 2016 - Proceeding ISBN: 978-1-5090-3885-5/ P02- 14-16 December 2016 - ESA/ESTEC, The Nether-lands**) introduit une méthode pour effectuer la compression du signal GNSS, exploitant l'or-thogonalité CDMA (temps et espace) des signaux GNSS facilitant le déploiement de services d'authentification GNSS à distance.Limitations**

Comme indiqué précédemment, les méthodes de protections classiques nécessitent des échanges de clés et des algorithmes de calcul complexes, vulnérables à l'observation et à la divulgation du secret, et impliquent l'intervention de tiers de confiance. Ces vulnérabilités, en partie dépendantes des capacités de protection de l'accès aux infrastructures de sécurité, sont à évaluer en regard des risques de sécurité qui peuvent dépendre de la nature ou du contexte des applications ou des services.

L'approche « Zéro Confiance » (dite « Zero Trust » en langue anglaise), qui prône une sécurisation délocalisée et à la source des informations, apparait synergique avec les capacités des systèmes GNSS à satisfaire ces objectifs.

Cependant, les premiers travaux menés en ce sens dans le monde GNSS sont limités à la sécurisation des seules informations liées au géoréférencement, sans envisager de généraliser leur exploitation pour la sécurisation de tous types de données, à tous niveaux et selon des niveaux de protection adaptés aux risques de sécurité.

Le concept de Positionnement à distance notamment est considéré comme un moyen d'augmenter les capacités de géolocalisation des utilisateurs des services de navigation GNSS ouverts, plus sensibles aux perturbations de l'environnement de réception, et reste focalisé sur la capacité de calculer une position et un temps dans un environnement physique à accès sécurisé, permettant de mettre en œuvre des procédures d'accès aux signaux des services de navigation GNSS chiffrés, auxquels les utilisateurs standards n'ont pas accès.

**Solutions au problème**

L'approche de sécurisation d'information d'intérêt proposée vise à satisfaire en partie les recommandations du NIST SP 800-207 liées aux nouveaux principes de mise en œuvre de la cybersécurité, en ce que l'information est sécurisée à la source et peut être reçue et vérifiée avec différents niveaux de confiance, selon les capacités de traitements du destinataire et de son habilitation à traiter des informations de confiance.

Elle peut en outre être déployée en tout lieu et à tout moment, sans tiers de confiance et sans infrastructure de sécurité dédiés à la génération de clés secrètes ou d'algorithmes de chiffrement, sans réclamer de protections spécifiques supplémentaires pour les équipements les mettant en œuvre.

Elle repose sur un principe de subsidiarité qui donne la capacité aux utilisateurs habilités des systèmes GNSS mettant en œuvre le principe de l'invention, de réaliser par eux-mêmes la sécurisation des informations d'intérêt en s'appuyant sur les réglementations d'accès aux signaux mis en place par les systèmes GNSS. Une telle délégation est rendue possible en liant les informations d'intérêt à sécuriser avec des caractéristiques liées au géoréférencement et à la datation, accessibles au travers des systèmes GNSS, largement déployés, qui possèdent par ailleurs des infrastructures protégées et la capacité intrinsèque de délivrer les informations de position et de temps avec différents niveaux de sécurité.

La capacité à assurer un tel lien et de le mettre à profit pour hériter des capacités de sécurité offertes par les systèmes GNSS au profit de la sécurisation de l'information ou de données, est au cœur de la présente invention.

L'intérêt de la solution de cybersécurité proposée repose principalement sur la grande disponibilité et la pérennité des systèmes GNSS existants et sur leurs évolutions futures qui contribuent, par essence, à maintenir et à améliorer la robustesse du positionnement et du transfert de temps précis, et à atténuer leur vulnérabilité aux attaques cyber telles que le leurrage et le brouillage.

Elle vise à satisfaire deux objectifs principaux en matière de sécurité :

- Protéger à la source les données d'intérêt qui doivent être échangées, en empêchant toute modification intentionnelle ou non intentionnelle et toute divulgation de leurs contenus.
- Vérifier, à quelque niveau que ce soit, l'origine de l'information et assurer qu'elle n'a pas été créée ou modifiée par des tiers.

L'objectif de la solution est de fournir de telles protections en matière de communication et de stockage des informations sans augmenter les infrastructures de sécurité et les contraintes, au-delà de celles déjà mises en œuvre pour le déploiement des services de navigation GNSS, et de fournir une protection de sécurité adaptable correspondant au niveau de menace de l'opération.

Un autre objectif est de ne pas accroître la complexité du traitement au-delà de ce qui est déjà nécessaire pour accéder aux services de navigation GNSS déjà utilisés dans les systèmes d'information.

La solution consiste à sécuriser les informations d'intérêt à enregistrer ou à transmettre via un procédé de chiffrement et d'authentification des données basé sur un mécanisme de cryptographie symétrique, mais capable de fonctionner sans obligation de partager des clés secrètes pour réaliser le chiffrement et déchiffrement du document.

En s'appuyant sur la constatation qu'il n'existe qu'une seule coïncidence de date et de lieu physique associée à un évènement donné, une telle capacité est obtenue en dérivant les clés secrètes de chiffrement depuis les mesures de la date et de la position de l'évènement, constituant la clé maitresse, caractéristiques de l'instant et du lieu physique de création du conteneur chiffré et authentifiable.

Afin de réaliser une encapsulation virtuelle insécable de l'information d'intérêt avec l'identification de la source, le chiffrement est réalisé en utilisant des caractéristiques spatio-temporelles communes à l'authentification et au cryptage du conteneur, rattachées à la date et au lieu de l'évènement. Les caractéristiques spatio-temporelles de l'évènement sont à la source de la génération aussi bien des caractéristiques d'authentification que des clés de cryptage.

A cette fin, les clés de chiffrement sont calculées en fonction des phases de code des signaux GNSS reçus pour cette date et cette position, et pour les privilèges utilisateurs d'accès aux signaux GNSS définis par la constellation, le service de navigation, les fréquences, le type des codes d'étalement.

Les phases de code des signaux reçus, alignées sur la base de temps du système GNSS et dépendantes du retard de propagation entre les satellites et l'antenne de réception, fournissent une combinaison unique de mesures de phases utilisées comme racines de chiffrement et d'authentification à la création du conteneur de données chiffrées.

L'instant et le lieu physique jouent ainsi le rôle de germe de chiffrement, ou encore de clé maitresse, qui permet d'élaborer les clés de chiffrement secrètes et de constituer les caractéristiques d'authentification.

A la création du conteneur, assimilée par la suite à la création du document chiffré ou à la création du message chiffré, la position et le temps de l'évènement sont déterminés grâce à la réception du signal GNSS délivré par une antenne dont la localisation sert de référence reconnue pour contribuer à authentifier l'origine de l'acte certifié (par exemple un cabinet de notaire, une administration ou toute autorité de référence).

Dans le cas général d'utilisation, il n'est pas nécessaire que la position de l'antenne soit référencée, tout utilisateur désirant créer par lui-même un document chiffré pouvant utiliser son propre moyen de géoréférencement GNSS quel que soit la position et la date de l'évènement.

Le système GNSS joue donc un rôle important dans la transformation de l'instant et du lieu physique, notions immatérielles mais support de la clé secrète, en des caractéristiques tangibles mesurables qui servent à l'estimation du temps et de la position et, par ce biais, à l'élaboration des clés de chiffrement.

A la lecture du conteneur protégé, la reconstitution des clés de chiffrement nécessite donc l'accès au temps et à la position de création du message chiffré.

Un tiers observateur ne pourra pas reconstituer les clés de chiffrement s'il ne dispose pas des informations de localisation et de datation correspondant à la création du document chiffré, ni des privilèges d'accès au service de navigation GNSS utilisé pour réaliser le chiffrement.

Différents modes de transmission sont rendus possibles par l'invention :

- La fourniture en clair du temps et de la position du document chiffré, la génération des codes de chiffrement nécessitant dans ce cas la génération d'aléas supplémentaires (tels les codes PRN cryptés associés à certains des services de navigation) rendant impossible l'acquisition par un tiers des phases de code bruitées, les racines de l'algorithme de génération des codes associées à la position et à la date étant connus uniquement par les utilisateurs autorisés,
- La fourniture chiffrée du temps et de la position, dans le même conteneur ou via un média sécurisé séparé,
- L'envoi d'une empreinte du signal reçu au moment de la création du document chiffré, constituée d'une tranche temporelle de durée limitée du signal reçu, qui permet au destinataire de réaliser sa propre estimation de la position et du temps de création du document chiffré et de reconstituer les clés de chiffrage à base des phases de code.

L'invention décrit différentes options de mise en œuvre de transmission des clés secrètes qui pourront être adoptées selon le domaine d'application ou du niveau de protection souhaité face aux menaces cyber.

Le chiffrement des données à protéger s'appuie sur les codes pseudo-aléatoires connus et disponibles qui servent à l'identification des satellites GNSS ainsi qu'à l'estimation du temps GNSS reçu des signaux (dite aussi la phase de code) dans l'échelle des temps GNSS, à l'instant précis de réception correspondant à la date de création du message.

La méthode de chiffrement consiste, lors de la création du message chiffré :

- à utiliser les phases de code mesurées des signaux des satellites reçus au lieu et au moment de la création de l'information, comme clé pour chiffrer les données d'intérêt afin de protéger tout accès par des tiers non autorisés,
- à générer une signature , dite l'empreinte GNSS, cohérente avec les phases de code mesurées, qui permettra en lecture d'authentifier la position et l'heure de la création du message et à reconstituer les clés de chiffrement.

Chacune des phases de code, mesurée par le récepteur GNSS, sert aussi à générer un retard, proportionnel en nombre de bribes de code, dit chips de code dans son appellation courante en langue anglaise par la suite, appliqué sur la séquence pseudo-aléatoire combinée avec la séquence de données. Ce retard est équivalent à une clé servant de racine à la génération de la séquence du code PRN, lui-même à accès protégé ou non, toujours disponible et inviolable sans la connaissance précise de la position et de la date de l'évènement correspondant.

Les codes utilisés, différents d'un satellite à l'autres, sont appliqués par tranche de temps selon un séquencement déterministe ou codé qui peut lui-même être utilisé pour augmenter la complexité du chiffrement.

Les tiers qui ne disposent ni de la connaissance des codes utilisés, ni du retard d'alignement de la séquence de chips de code sur les données à chiffrées ne pourront que très difficilement réussir l'opération inverse de déchiffrement. Celle-ci consiste à rechercher, par exploration glissante du domaine d'incertitude en temps et dans l'espace, le retard maximisant la corrélation entre la séquence chiffrée et le code de chiffrage, une caractéristique des codes pseudo-aléatoires (PRN) étant que le résultat de corrélation reste nul tant que les phases de code ne sont pas alignées. Le déchiffrement nécessite d'acquérir ou de connaitre les phases de code avec moins de $1\mu s$ d'incertitude pour la plupart des codes des services ouverts, voire moins de $0,1\ \mu s$ dans le cas de signaux à accès réglementés.

L'empreinte GNSS, qui peut servir à la transmission au destinataire des informations de position et de temps et aussi à l'authentification de l'origine du conteneur, contient une tranche temporelle du signal reçu collecté au moment et au lieu de création du message (comprenant par défaut les signaux de toutes les constellations, pour tous les services de navigation et tous les satellites) qui est cohérente avec les phases de code mesurées, utilisées à la création du message pour chiffrer les données d'intérêt et pour calculer la position et l'heure de création du message.

Une telle empreinte contient les signaux réels tels qu'ils sont reçus, à faible rapport signal/bruit, avant toute démodulation de la phase de code et du message de navigation, et avant tout décryptage du code du signal et des données lorsqu'elles sont disponibles pour un service de signal donné.

Le traitement d'authentification de l'origine du document chiffré, réalisé au niveau du destinataire, consiste à acquérir les phases de code des satellites à l'aide de la tranche de signal GNSS transmise par l'empreinte, puis à vérifier la cohérence avec les mesures de position et de temps transmises encapsulées dans le message, et lorsqu'elles sont cohérentes, à décrypter les données chiffrées d'intérêt sur la base de ces phases de code.

Un mode possible de mis en œuvre du procédé consiste à réaliser localement, sur une plage de retard limitée, la corrélation entre la tranche enregistrée du signal GNSS contenu dans l'empreinte avec des tranches de code local, initialisées avec des phases de code calculées en fonction du Temps et de la Position d'identification transmis par le conteneur, et de la connaissance des éphémérides des satellites.

Si le niveau du maximum de corrélation est suffisamment élevé, le signal enregistré correspond au temps et à la position fournis, sinon, le signal GNSS enregistré n'est pas cohérent avec l'heure et la position fournis dans l'identifiant du conteneur, ce qui signifie que l'empreinte a été falsifiée.

Dans des modes de mise en œuvre particuliers pour assurer la protection de l'identifiant contenu dans le conteneur (cad les informations de position et temps de l'identifiant), les phases de codes GNSS peuvent être bruitées volontairement, par une séquence aléatoire d'écart-type réglable en vue de bruiter les informations de position et de temps GNSS d'identification transmises dans le conteneur, ceci afin de rendre difficile l'acquisition du retard depuis l'empreinte, pour un tiers qui aurait eu accès, à la lecture du conteneur, à la position et au temps de création du document chiffré, ou qui intercepterait ces informations dans le cas où elles seraient diffusées en clair, pour des informations d'intérêt non critiques.

Ce bruitage de la phase peut être réalisé par un générateur de bruit, qui peut être public, dont le germe dépend de la date GNSS de création du document chiffré donnée en temps GNSS quantifiées en époques rondes de l'ordre de 10 à 100ms. Un tel générateur est alors partagé par tous les utilisateurs habilités à utiliser le système de protection des données pour enregistrement ou transmission. L'écart-type réglable de l'aléas permet d'ajuster le domaine de recherche spatial et temporel, et donc la complexité de calcul nécessaire pour acquérir les données chiffrées sans connaissance de l'aléas.

Dans un tel contexte de menace cyber élevée, impliquant un soupçon de violation du conteneur et l'usurpation du signal GNSS, une certification de l'authentification par une autorité externe accréditée est envisageable dans le cadre de la protection des infrastructures de sécurité sensibles, en effectuant le contrôle de l'empreinte sur la base des signaux GNSS à accès réglementé, tel le service de navigation PRS de Galileo.

Dans le cas d'une mise en œuvre du procédé d'authentification sur les signaux ouverts, bien que les signaux reçus présents dans l'empreinte possèdent les mêmes phases de codes racines que ceux des signaux reçus et poursuivis à la création du message, ils sont bien plus difficiles à acquérir sans information a priori, même approximatives, sur la position et le temps de la création du document chiffré, du fait de la durée limitée de l'empreinte, qui implique de mettre en place des moyens de traitement conséquents, dit de force brute, pour réaliser l'exploration des phases de réception dans des plages de retards importants.

Dans une telle approche, c'est donc la complexité du traitement d'acquisition des racines de cryptage qui fait office de protection, et nécessite une batterie de corrélateurs massivement parallèles pour réaliser une acquisition quasiment instantanée, dite snapshot en langue anglaise, de la séquence de signal de l'empreinte.

La mise en place de traitements de force brute pour réaliser ladite acquisition snapshot et l'extraction des clés à partir de l'empreinte, si elle est plus sécurisée et fonctionnellement simple de conception, n'est pas la seule approche possible.

Une manière de réduire la complexité d'acquisition snapshot consiste à fournir en parallèle les estimations de la position et de la date obtenues par un récepteur GNSS à la création du message, afin d'aider à l'acquisition des mesures de phases racines réalisées à partir de l'empreinte.

Trois options de chiffrement des données, d'applications combinées ou séparées, sont possibles à ce niveau :

- la position et la date GNSS à la création du conteneur sont fournies en clair et non bruitées, mais le chiffrement des données réalisé à partir des phases de code non bruitées fait appel à un code PRN GNSS crypté protégé, dont les clés d'accès sont partagées par tous les utilisateurs GNSS autorisés. L'utilisation des codes GNSS cryptés, par exemple les services de navigation Commercial (CS) ou Signal Publique Règlementé (PRS) de la constellation Galileo, répond à ce besoin sans devoir utiliser d'autres clés que celles déjà disponibles en réception des signaux GNSS pour générer les séquences de codes cryptés,

- la position et la date GNSS à la création du conteneur sont fournies non bruitées, mais chiffrées, de sorte à protéger leur accès par des tiers, nécessitant , contrairement à la première option, une infrastructure de chiffrage spécifique par clés symétriques ou asymétriques. Cependant, les codes utilisés pour réaliser le cryptage et décryptage des données peuvent rester à accès libre, par exemple le service Signal Ouverts (OS) de la constellation Galileo, la protection étant assurée simplement par la décorrélation des codes lorsqu'ils ne sont pas synchronisés sur la même phase.

- la position et la date GNSS à la création du conteneur sont fournies bruitées selon un algorithme de génération pseudo-aléatoire dont le germe d'origine est basé sur le temps GNSS de l'instant de création du message. En parallèle, les phases de codes GNSS mesurées, utilisées pour décaler les codes servant au cryptage des données sont elles-mêmes affectées de biais (dit offsets) fonctions de l'écart entre les positions à la création bruitées et non bruitées . Ce qui nécessite pour le destinataire, soit qu'il puisse calculer, pour les corriger, les aléas de bruit ajoutés à la position et au temps à la création du message, soit qu'il dispose des ressources de traitement suffisantes pour réaliser, à partir la position et la date GNSS, ou de l'empreinte transmise du signal, l'exploration du domaine d'incertitude des phases de codes de déchiffrement.

Pour les trois options, les informations de position et de temps fournies sont utilisées pour réaliser l'authentification en position et temps en partant de l'empreinte, et pour réduire le domaine de recherche des phases de codes. Les éphémérides, qui permettent de calculer les positions des satellites, et les modèles d'erreur, qui permettent de corriger le retard de propagation atmosphériques et d'horloges satellites, sont connus et accessibles par ailleurs par les utilisateurs de la constellation GNSS.

Dans le cas de la troisième option, la génération d'aléas, appliquée sur la position mesurées à la date de création du conteneur, est contrôlée en amplitude de telle sorte que l'écart-type de l'erreur de position résultante entraine une charge de calcul suffisante pour décourager des tentatives d'intrusion par acquisition snapshot de l'empreinte par des tiers non autorisés tout en restant admissible pour des destinataires autorisés, mais qui ne disposerait pas de l'algorithme de bruitage.

Afin d'interdire l'accès au cryptage des données par les phases de code par un tiers qui aurait mis en œuvre des moyens d'acquisition des phases de code par force brute à partir de l'observation de l'empreinte d'authentification, les amplitudes desdits offsets de phase de code ajoutés aux phases de code estimées à la création du conteneur sont calculées par application d'un facteur de proportion aléatoire sur les écarts de phases de code entre la position estimée non bruitée, et la position bruitée transmise, le même générateur de bruit étant utilisé pour générer l'aléas de position et le facteur de proportion.

Dans le cas d'utilisateurs autorisés disposant de l'algorithme de génération d'aléas, ceux-ci devront connaitre par ailleurs la valeur de l'écart-type de l'erreur ajoutée, qui doit rester secrète, et initialiser l'algorithme de génération avec l'information de temps bruité transmise convertie en époques rondes d'une milliseconde, le bruit ajouté sur le temps ne devant alors pas dépasser 1ms.

Il reste aussi possible d'implanter une approche sans protection particulière pour transmettre la position et la date, ou pour chiffrer les codes de cryptages. Dans ce cas, il est possible pour un tiers observateur du conteneur de reconstituer les clés de chiffrage spatio-temporel, à condition de disposer du modèle de calcul de ces clés à partir des phases de codes, ainsi que des éphémérides et des modèles de correction d'erreur appliqués.

Cette seule méconnaissance des traitements et des modèles peut s'avérer suffisante dans le cas d'applications grand public ne nécessitant pas de protection cyber en première approche.

Une solution alternative permettant d'utilisation de code à accès public, en place des codes à accès réglementés, lorsque la position et la date GNSS à la création du conteneur sont fournies en clair, consiste à réaliser un entrelacement périodique ou aléatoire, dit entrelacs, de séquences de différents codes PRN ouverts utilisés pour le cryptage des données, par exemple en sélectionnant pseudo-aléatoirement les codes des satellites, éventuellement prélevés sur plusieurs constellations, plusieurs fréquences, selon des séquencements à tenir secrets, connus des seuls utilisateurs du service de chiffrage symétrique.

Ces différentes options d'authentification et de cryptage sur la base de clés spatio-temporelles sont détaillées au travers des explications associées aux figures illustrant les principes de traitements envisagés par l'invention ainsi que des modes particuliers de réalisations et de mises en œuvre liées à la synchronisation des traitements avec les données des signaux GNSS.

## Avantages apportés

Cette innovation apporte de nouvelles capacités pour vérifier et certifier l'authenticité de l'origine et du contenu des documents ou de rapports en fournissant le moyen de démontrer, le cas échéant, l'authenticité de la position et de la date de sa création. C'est également un moyen d'authentification de tous équipements délivrant un message d'identification comprenant son identité et sa position datée.

Elle permet de protéger les informations à la source, minimisant les contraintes sur les infrastructures de sécurité (réglementation des accès aux locaux et aux équipement) et ne nécessitant pas de privilèges d'accès spécifiques ou d'infrastructures de sécurité dédiées

La solution proposée offre des avantages significatifs par rapport aux processus de chiffrement standard basés sur des clés symétriques ou asymétriques, nécessitant une gestion cryptographique centralisée et/ou sécurisée, en particulier :

- Il n'y a pas besoin d'infrastructures de gestion de clés externes ni de communication sécurisée ni d'autorité cryptographique autre que celle du GNSS
- La protection cyber repose principalement sur la complexité, pour un tiers malveillant, d'accéder à des phases de codes clés du chiffrement sans connaissance précise de la position et la date de création du message et/ou sans avoir les clés de génération des codes des signaux protégés par le système GNSS,
- Une encapsulation protégée du conteneur du message chiffré n'est pas nécessaire en raison de l'authentification robuste et du chiffrement des données à la source offerte par la solution.
- Sa mise en œuvre ne nécessite pas d'accréditation supplémentaire autre que celle nécessaire pour que l'utilisateur accède aux services de navigation GNSS, et la technologie de traitement repose sur la technologie GNSS mature et éprouvée
- Il est disponible partout et à tout moment, permettant aussi l'authentification de messages enregistrés dans le passé.

Une variété de constellations GNSS indépendantes peut être envisagées comme sources de référencement mondiales, disponibles en continu et en tous lieux, permettant chacune de caractériser un évènement de manière unique selon un ensemble de paramètres multiples.

Différents niveaux de contrôle de l'authentification et de sécurité, utilisant les niveaux de protection et de privilèges d'accès aux signaux disponibles par construction, peuvent être mis en place.

La même empreinte GNSS peut être utilisée pour certifier l'information selon le prisme de différentes constellations

## Brève description des figures

L'invention sera mieux comprise à la lecture de la description de plusieurs formes de réalisation qui va suivre, donnée uniquement à titre d'exemple et faite en se référant aux dessins sur lesquels :

[Fig.1] présente le mode de réalisation le plus général du procédé de chiffrement spatio-temporel basé sur le positionnement et la datation précise GNSS,

[Fig.2] présente le principe général de génération, en écriture, des clés de chiffrage spatio-temporel basé sur les caractéristiques du signal GNSS reçu,

[Fig.3] présente le principe général de cryptage en écriture, des données d'intérêt basé sur les caractéristiques du signal GNSS reçu,

[Fig.4] présente le principe de bruitage en écriture de la position et du temps GNSS à la création du message,

[Fig.5] présente le principe général de reconstitution, en lecture, des clés de chiffrage spatio-temporel basé sur l'empreinte GNSS capturée à la création du message,

[Fig.6] présente le principe de fonctionnement général de chiffrement/ déchiffrement spatio-temporel basé sur la capture conjointe de la position et du temps GNSS et d'une empreinte du signal GNSS,

[Fig.7] illustre le synchronisme des signaux GNSS en émission et en réception dans le cas de codes périodiques, ainsi que la plage de capture de l'empreinte GNSS à la date $t_0$ de création du message chiffré,

[Fig.8] présente le chronogramme de cryptage des données par les chips de code du satellite sélectionné, décalés de la phase de code reçue à $t_0$,

[Fig.9] présente le cryptage des données par tranches successives, par les chips de code du satellite alloué à chacune des tranches, décalé au début de chacune des tranches par la phase de code du satellite correspondant reçue à $t_0$,

[Fig.10] illustre le principe d'identification de la source d'information utile, consistant à ajouter à l'information d'intérêt un identifiant, constitué de la référence de la source, de la position et de la date GNSS précises de création du message chiffré,

[Fig.11] illustre le principe de génération des clés de cryptage spatio-temporelles à partir du géoréférencement GNSS, par capture des phases de code des signaux GNSS poursuivis à l'instant de création du message chiffré,

[Fig.12] décrit un premier mode de mise en œuvre du cryptage de l'information d'utilité à partir des clés spatio-temporelles à des fins de transmission des données chiffrées dès la création du conteneur, réalisé par combinaison entre les données d'intérêt codées en binaires et les codes PBSK retardés selon les phases de code capturées à l'instant de création du message chiffré,

[Fig.13] décrit un second mode de mise en œuvre du cryptage de l'information d'utilité à partir des clés spatio-temporelles générées, à des fins d'enregistrement, réaliser sans contrainte de cadencement,

[Fig.14] illustre le principe de capture de l'empreinte GNSS réalisée après conversion analogique numérique du signal GNSS reçu,

[Fig.15] décrit un mode de réalisation de l'authentification multi-facteur de la position et du temps GNSS à partir des clés spatio-temporelles extraites réalisant la comparaison entre la position et le temps GNSS à l'instant de création transmis dans le conteneur, et la position et le temps estimés à partir de l'empreinte GNSS,

[Fig.16] décrit un mode de réalisation de l'acquisition snapshot des phases de code à partir de l'empreinte GNSS, aidée par la position et le temps GNSS transmis dans le conteneur, dans le cas d'un signal GNSS modulé avec des données de navigation impliquant un alignement de l'intégration cohérente de la corrélation sur les transitions de données du message GNSS,

[Fig.17] décrit un mode de réalisation du décryptage de l'information utile à partir des clés spatio-temporelles, obtenues par extraction des phases de code des signaux issues de l'empreinte GNSS,

[Fig.18] décrit le principe d'évaluation du risque cyber en fonction de la réussite des opérations d'authentification et de décryptage selon la nature des signaux GNSS mis en œuvre,

[Fig.19] décrit une implémentation, préférée mais non limitative, du système servant à l'identification et au cryptage par chiffrage spatio-temporel en écriture, mettant en œuvre un récepteur de positionnement GNSS et des moyens de calcul associés pour réaliser le traitement de chiffrage,

[Fig.20] décrit une implémentation, préférée mais non limitative, du système servant à l'authentification et au décryptage par chiffrage spatio-temporel en lecture, mettant en œuvre un récepteur GNSS et des moyens de calcul associés pour réaliser le traitement de déchiffrage.

**Solution technique**

La solution technique adoptée par l'invention reprend, en les rationalisant, les approches précédentes envisagées précédemment dans l'exploration de solutions au problème.

En regard des différentes options présentées, et dans l'objectif d'assurer le meilleur compromis entre la robustesse de la sécurité et la complexité de l'implémentation, la solution technique retenue par l'invention s'attache à la réalisation des capacités suivantes :

- L'échange des clés nécessaires à l'authentification et au cryptage est réalisé sur la base du partage d'une empreinte entre l'émetteur et le destinataire,
- L'acquisition des clés de cryptage est réalisée par le destinataire à partir de l'empreinte en s'aidant de l'information secrète de position et de temps associé et transmise sous forme bruitée par l'émetteur au destinataire,
- L'authentification est réalisée en calculant l'écart en position et en temps calculé à partir des écarts de phase de code des signaux satellites reçus, mesurés sur le signal GNSS reçu à la date de création du message et celle extraite de l'empreinte par le destinataire
- A priori, dans un premier mode de réalisation, les codes PRN utilisés pour crypter les données d'intérêt sont ceux des signaux GNSS publics,
- Les phases de code des signaux satellites GNSS reçus constituent les clés principales de chiffrement des données d'intérêt, appliquées selon un séquencement déterministe ou aléatoire,
- Les informations d'identification constituées de la date et de la position de création du document chiffré, ne sont pas fournies en clair, mais quantifiée (pour la date) et bruitées (pour la position) selon un germe de génération du bruit donné par le temps de création quantifié (correspondant à une date GNSS arrondie),

La solution traite des deux aspects de l'authentification et du chiffrage des données d'intérêt :

- A la source, l'encodage des caractéristiques d'authentification liées au signal GNSS reçu et à la phase de code PRN des satellites, et le chiffrage des données d'intérêt,
- A destination, l'authentification de l'origine du message et le décodage des données chiffrées, qui reposent sur la cohérence des phases des codes PRN extraits de l'empreinte du signal reçu, vérifiée au regard des informations de position et de temps associées au message.

Le principe général du fonctionnement consiste à la mise en œuvre des fonctions suivantes :

i. Au niveau de la génération des messages :

- Les données d'intérêt à transmettre ou à enregistrer dans le conteneur sont disponibles en entrée sans protection,
- La position et l'heure de création du message sont calculées par un récepteur GNSS basé sur le ou les services de signal GNSS sélectionnés,
- Le récepteur GNSS fournit également:

  ■ les phases de code correspondantes des signaux des satellites, telles qu'elles ont été extraites à la création du message,

  ■ une courte tranche de temps du signal GNSS reçu (dite instantanée), collectée au moment et à la position de la génération du message, au niveau RF,

- Les données d'intérêt sont ensuite cryptées par modulation à l'aide de séquences de codes PRN, liées aux signaux satellites visibles reçus, par tranches générées cycliquement ou aléatoirement, alignées sur la phase de code mesurée, à l'initialisation, du signal satellite associé,
- Le message est ensuite formaté en encapsulant dans une seule séquence les informations suivantes :

  ■ L'identification (ID) du périphérique ou de la source de génération,

  ■ La position de l'antenne liée au dispositif et le temps précis de génération du message,

  ■ La tranche snapshot du signal reçu (empreinte),

  ■ Les données d'intérêt cryptées.

ii. Au niveau de l'utilisateur du message :

- Les informations sont extraites du message (ID, P(V), T, snapshot, data)
- L'acquisition des signaux des satellites s'effectue par corrélation avec les codes PRN locaux à l'aide de la tranche du signal, initialisée par la position et l'heure fournies dans le message, et des éphémérides connues des satellites:

  ■ Si le niveau de corrélation est suffisamment élevé et que la signature correspond à la position et à l'heure fournies, l'acquisition est effectuée avec succès, le message est authentifié et les données d'intérêt peuvent être déchiffrées.

- ▪ Si ce n'est pas le cas, la position et l'heure indiquées dans le message ne correspondent pas au signal disponible lors de la génération du message. La signature ou la position et l'heure pouvant avoir été falsifiées, le message n'est pas authentifié.

- Les données d'intérêt sont ensuite démodulées à l'aide des codes PRN générés localement et alignés sur les phases de code satellites obtenues par acquisition de l'empreinte.
- Différents niveaux de contrôle de l'authentification peuvent être effectués sur la base de la même tranche d'empreinte GNSS selon les privilèges d'accès aux signaux GNSS utilisés pour rechercher la preuve enfouie de l'authenticité de l'heure et de la position transmises. Par exemple, les constellations Galileo et GPS fournissent différents services signaux OS, C/A, CS, PRS et PPS qui peuvent être mis à profit dans le cadre de l'invention. Le service Galileo CS peut être accessible pour réaliser une authentification à usage commercial, tandis que le service de navigation Galileo PRS, à accès réglementé, n'est accessible qu'aux utilisateurs accrédités.

Dans le cadre de ce principe général de fonctionnement, la solution technique selon l'invention a pour objet un procédé d'authentification et de cryptage, dit de chiffrement spatio-temporel, ne nécessitant pas une autorité tierce, appliqué pour la protection d'une information d'intérêt en vue de garantir l'origine et l'intégrité de son contenu dans un but d'enregistrement ou de transmission, basé sur le positionnement et la datation précise utilisant les signaux GNSS, consistant :

- à estampiller le conteneur de l'information d'intérêt avec la référence de la source et la position et la date de sa création,
- à protéger l'accès à l'information d'intérêt par chiffrement liée à la position et à la date de création,
- à bruiter la position et la date de création transmise de façon à rendre ces informations inutilisables par des tiers,

les facteurs d'authentification et les clés de de cryptage dudit procédé étant définis de manière unique à partir des phases de code des signaux GNSS reçus à l'instant et au lieu de création du message chiffré.

Suivant des modes particuliers de réalisation, le procédé de chiffrement spatio-temporel comprend une ou plusieurs des caractéristiques suivantes, prises isolément ou en combinaison :

- cryptage de l'information d'intérêt par combinaison des données initiales codées en binaire [1, 0] , par au moins un des codes pseudo-aléatoires des signaux GNSS, dits codes PRN, pour Pseudo-Random Noise en langue anglaise, poursuivis en réception à l'instant $t_0$ de création du message chiffré, pour la constellation et le service de navigation choisi, la dite combinaison consistant à multiplier bit à bit la séquence de données d'intérêt initiale par la séquence de chips du code PRN, de type périodique ou apériodique, selon le type de service de navigation mis en œuvre dans le procédé. La multiplication bit à bit s'effectue après conversion des données binaires en données codées [+1, -1], codage noté #BPSK par la suite,

- authentification de l'origine dudit message chiffré, mettant en œuvre la position et la date GNSS transmises bruitées ainsi qu'une empreinte GNSS représentative des caractéristiques du signal GNSS reçu à l'instant de création et ajoutée dans le conteneur, ladite empreinte GNSS consistant en une tranche du signal GNSS numérisé en sortie de l'étage RF de réception GNSS, filtrée dans une bande de réception du signal GNSS compatible à minima de l'étalement en fréquence du code du service de navigation mis en œuvre,

- extraction des phases de codes à la date de création du message chiffré, estimées à partir de l'empreinte GNSS transmise, consistant en une acquisition instantanée, des codes des satellites visibles sur la seule longueur de l'empreinte, aidée par la position et la date GNSS bruitées transmis dans le conteneur

- décryptage des données d'intérêt chiffrées par les codes locaux alignés sur la phase de code des signaux reçus à l'instant de création du message chiffré,

- ajustement du niveau de sécurité de l'authentification par sélection de la constellation et du service de navigation GNSS, robuste au leurrage pressenti des signaux , le dit procédé d'ajustement de la sécurité de l'authentification consistant à extraire les phases de code de l'empreinte GNSS en utilisant, pour les utilisateurs ou autorités accrédités, un service de navigation GNSS crypté a priori non accessible à la menace pressentie,

- validation des données d'intérêt après déchiffrement, et évaluation du risque d'attaque cyber,

L'invention a également pour objet un dispositif composé d'un récepteur des signaux GNSS, un calculateur et des programmes informatiques, implantant les procédés de chiffrement et de déchiffrement d'une information d'intérêt dans un but d'enregistrement ou de transmission selon l'invention, caractérisé en ce qu'il comprend :

i) une antenne de réception GNSS,
ii) un récepteur GNSS mono ou multi constellations capable de traiter un ou plusieurs services de navigation en parallèle et de prélever une tranche de signal RF, dite snapshot, à la réception d'une commande externe, et de fournir les phases de codes des satellites visibles à cet instant,

iii) pour la création du conteneur protégé, un module de traitement et un logiciel interfacé avec le récepteur GNSS, configuré en chiffrement, capable de réaliser les traitements d'identification du conteneur et de cryptage de l'information d'intérêt à enregistrer ou à transmettre,

iv) pour la lecture du conteneur protégé, un module de traitement et un logiciel, configuré en déchiffrement, capable de réaliser les traitement d'authentification du conteneur et de décryptage de l'information d'intérêt enregistrée ou transmise.

Un autre objet de la présente invention est un service d'authentification supplémentaire de l'information d'intérêt délivrable par une tierce autorité accréditée capable de certifier l'origine et le contenu des données d'intérêt avec au moins un niveau de sécurité supplémentaire par rapport à celui fourni par le dispositif nominal

**Description détaillée**

La description de l'invention est détaillée dans les paragraphes suivants en regard des différentes figures explicatives qui précisent :

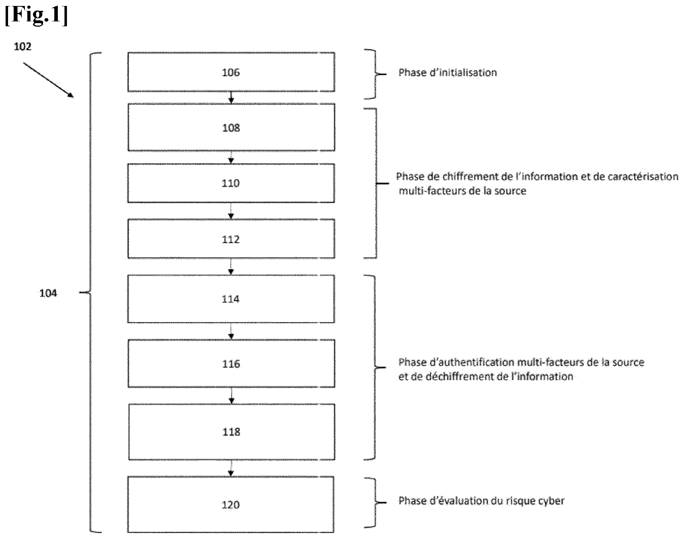

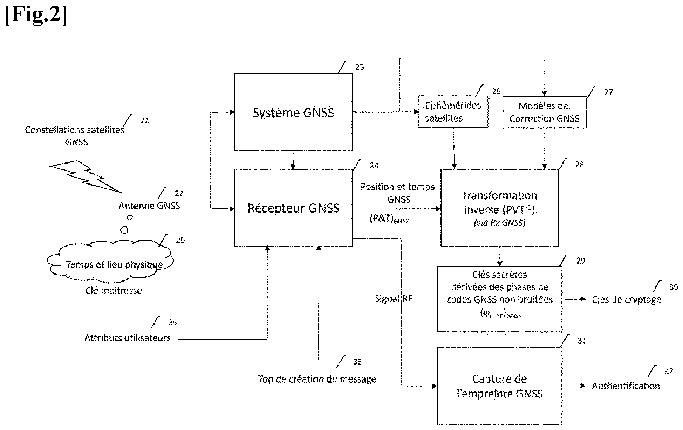

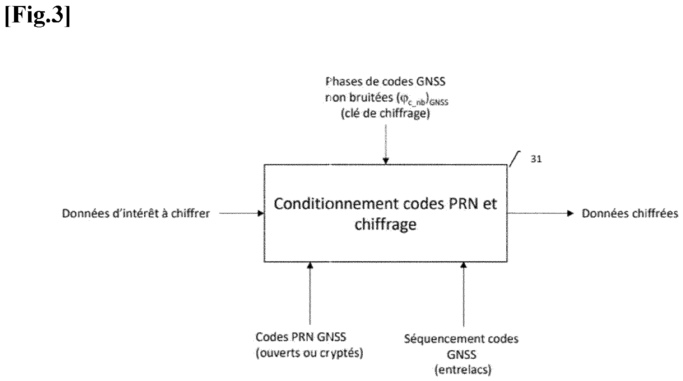

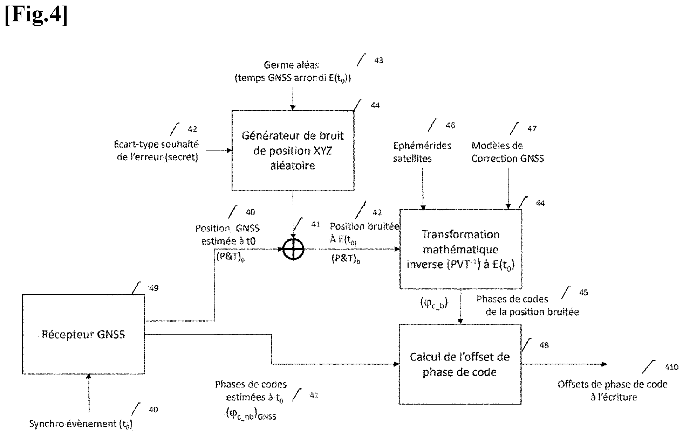

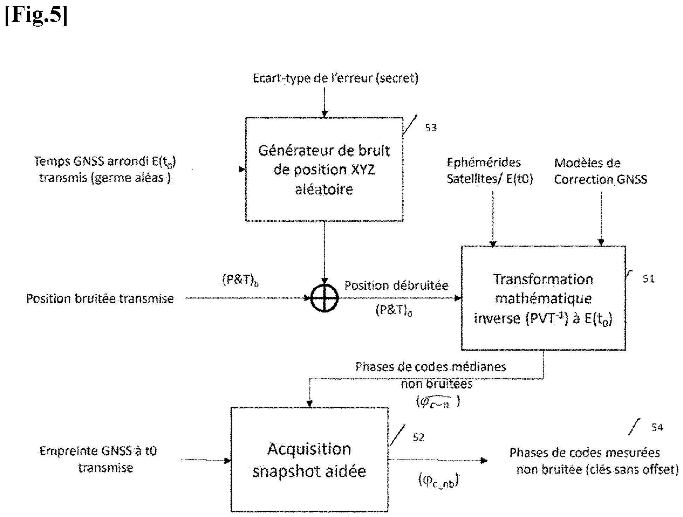

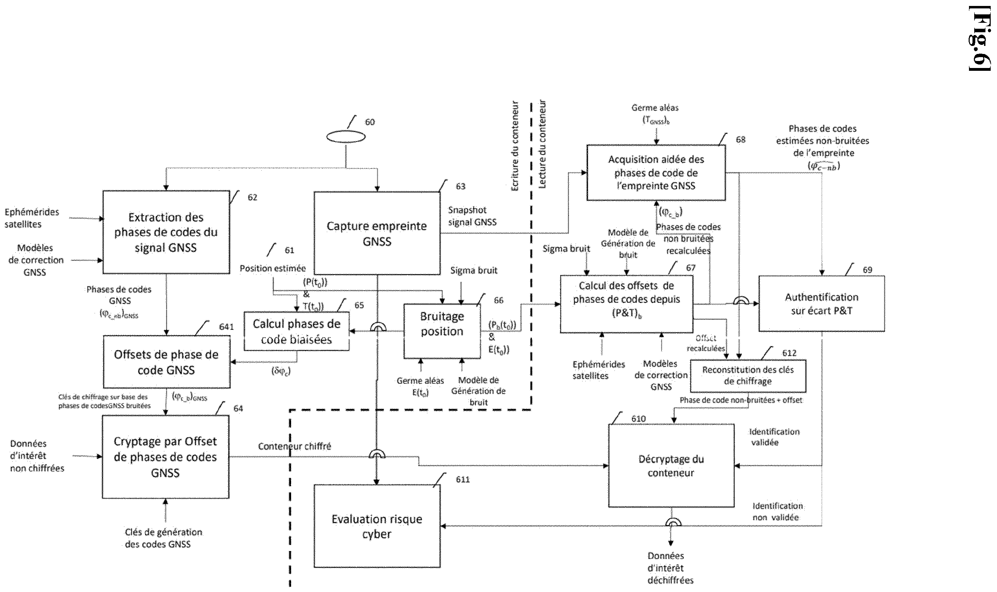

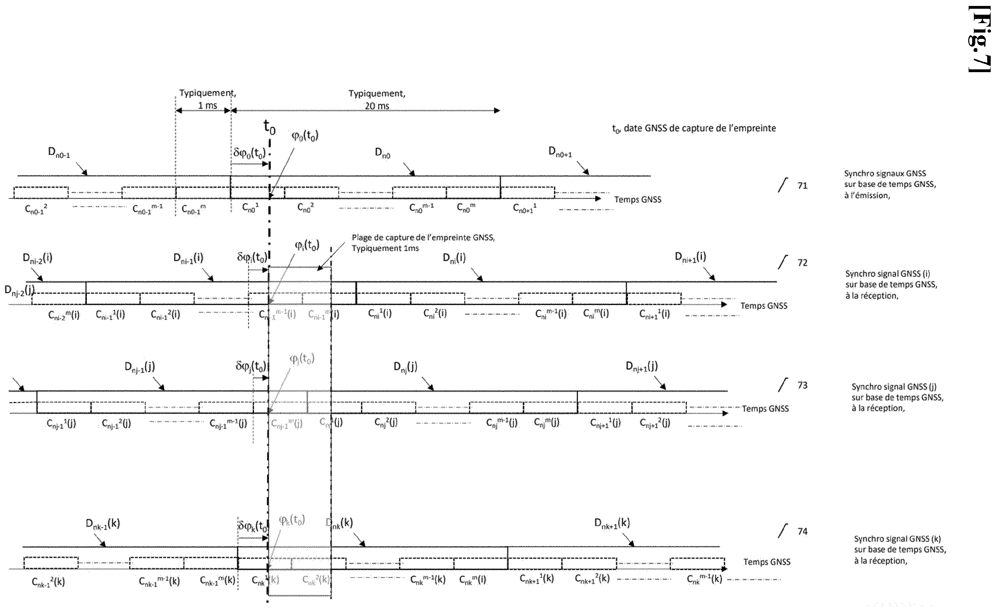

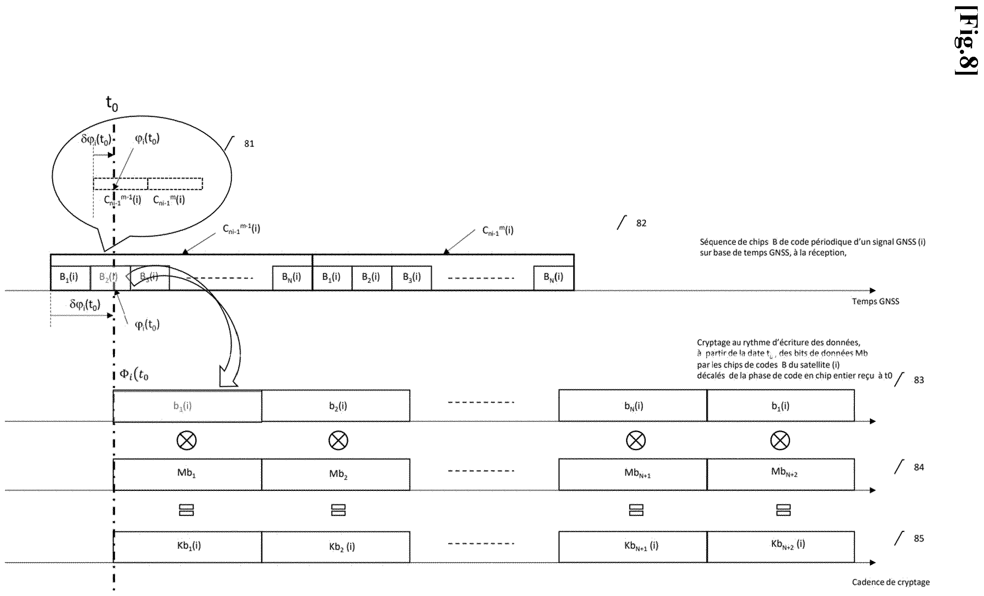

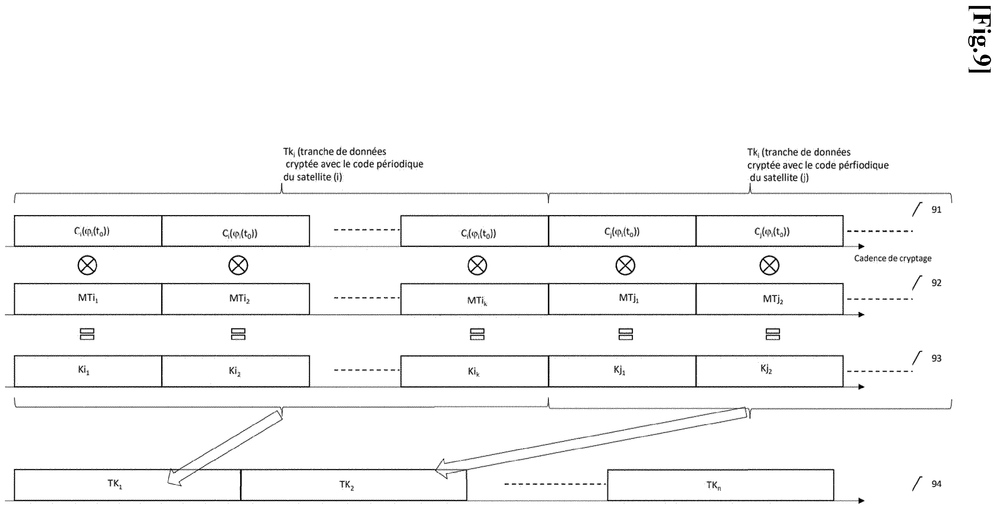

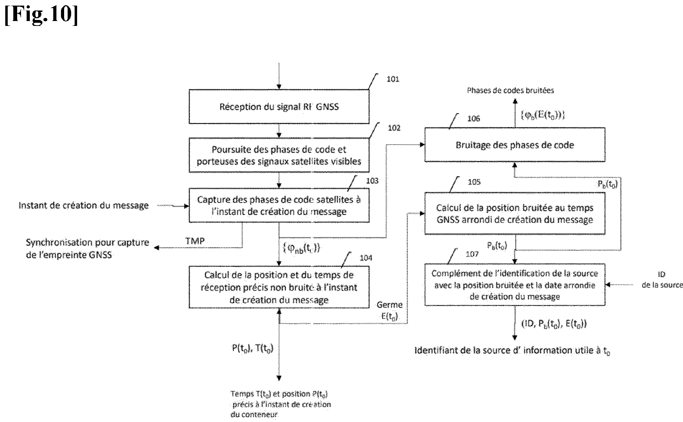

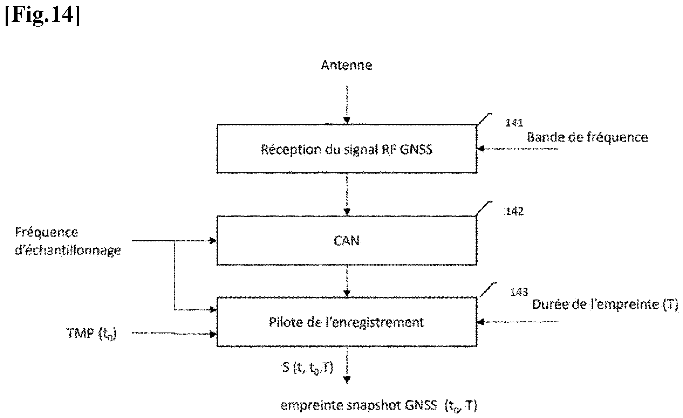

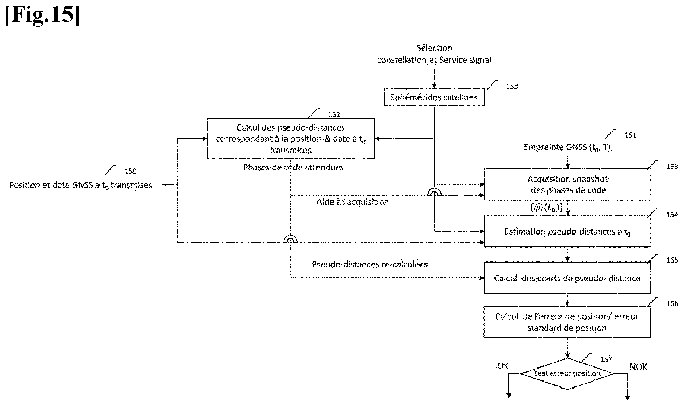

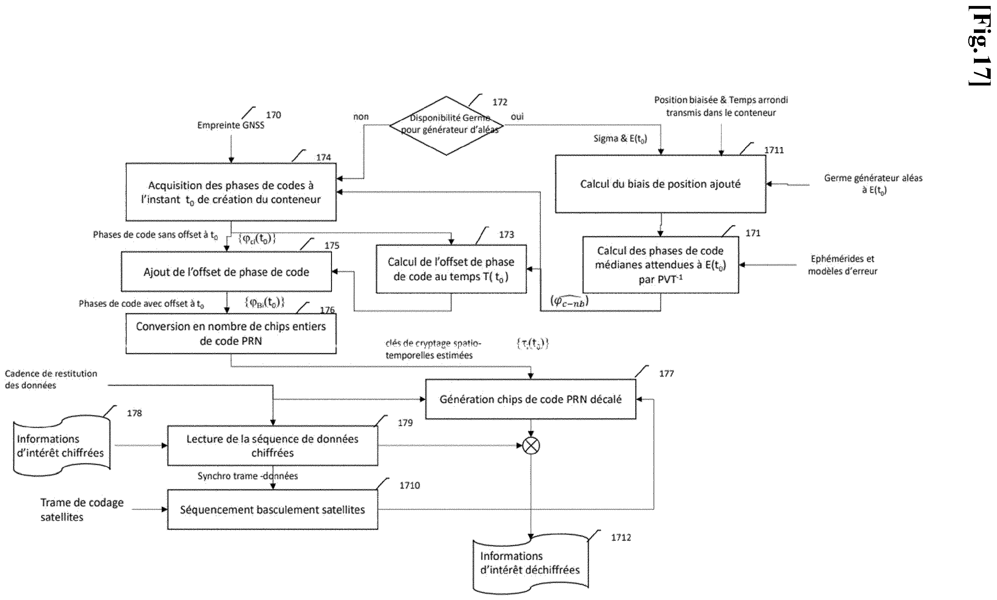

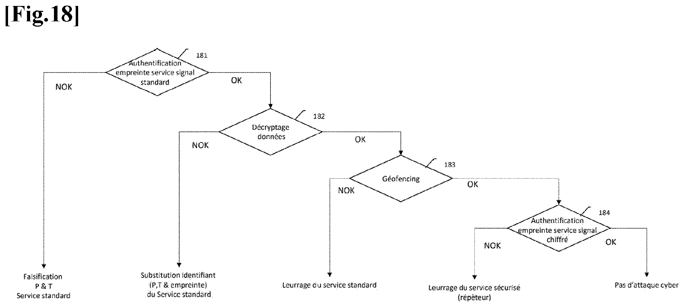

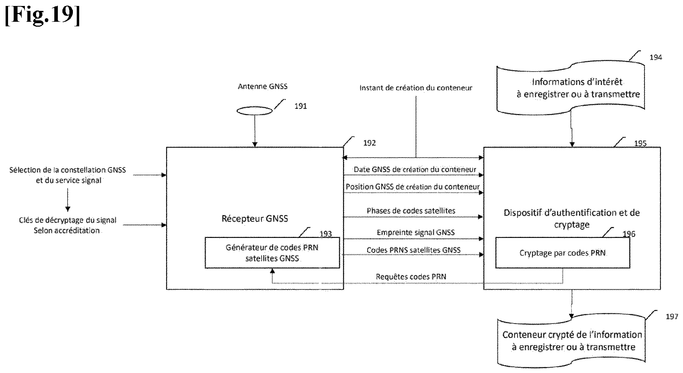

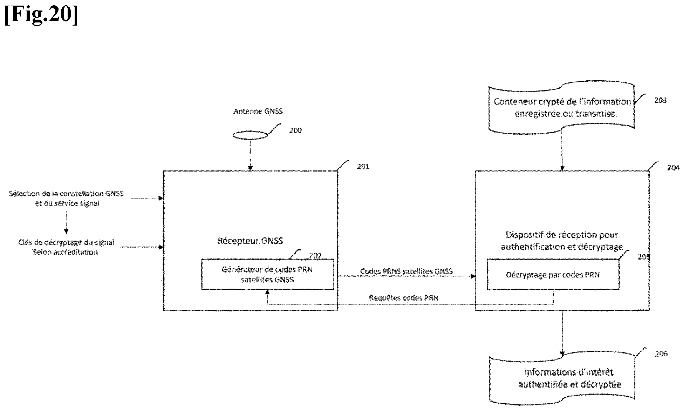

- le mode de réalisation le plus général du procédé, [Fig.1],
- le principe de génération des clés et de cryptage en écriture des données, [Fig.2] , [Fig.3], [Fig.4],
- le principe général de décryptage en lecture des données, [Fig.5],
- le principe de fonctionnement général de chiffrement/déchiffrement basé sur la fourniture de l'empreinte GNSS, [Fig.6],
- les chronogrammes de synchronisation pour le prélèvement de l'empreinte et pour le cryptage des données, [Fig.7], [Fig.8], [Fig.9],
- les traitements détaillés correspondant aux différentes étapes du procédé de chiffrement en écriture, [Fig.10] à [Fig.14],
- les traitements détaillés correspondant aux différentes étapes du procédé de chiffrement en lecture, [Fig.15] à [Fig.17],
- le synoptique de principe d'évaluation du risque cyber, [Fig.18],
- les modes de réalisation du système de chiffrement et déchiffrement réalisant le procédé [Fig.19] et [Fig.20],

[Fig.1] présente le mode de réalisation le plus général du procédé d'authentification robuste et résiliente par chiffrement spatio-temporel basé sur les signaux GNSS pour les systèmes de communication et d'information.

Le procédé selon l'invention comprend un ensemble (102) d'étapes, configurées pour mettre en œuvre une stratégie de chiffrement-déchiffrement ne réclamant pas une infrastructure de sécurité extérieure au système, définie sur la base de données cachées liées à la position et à la date de création, issues de caractéristiques intermédiaires instantanées mesurées sur les signaux GNSS , et tirant profit de la protection d'accès aux signaux diffusés par les systèmes GNSS mondiaux pour référencement de la source d'information utile.

L'ensemble (104) des étapes du procédé d'authentification robuste et résiliente par chiffrement spatio-temporel basée sur les signaux GNSS comprend, dans une première étape (106), en écriture, une phase d'initialisation, suivie d'une phase de chiffrement de l'information et de caractérisation multi-facteurs de la source qui s'appuient sur la synchronisation spatiale et temporelle des signaux GNSS reçus, selon les étapes (108), (110), (112), puis une phase d'authentification multi-facteurs de la source et de déchiffrement de l'information selon les étapes (116), (118), mettant en œuvre en particulier, en étape (114), un procédé d'extraction de clés spatio-temporelles réalisé à partir d'une empreinte prélevée sur le signal GNSS et enfin une phase d'évaluation du risque cyber en cas d'échec du déchiffrement en étape (120).

La première étape (106) d'initialisation, générique pour tous les modes de mise en œuvre, consiste, à l'émission, à associer au référencement de la source de l'information chiffrée (définie comme l'identité de la personne physique ou la référence de l'équipement), la date et le lieu de création du message chiffré fournit par un récepteur GNSS connecté à une antenne servant de référence.

Ces informations servent au transport des clés nécessaires à l'authentification et au décryptage du message chiffré par le destinataire.

Afin d'assurer la confidentialité de ces données, les mesures précises de position et de temps, délivrées par le récepteur GNSS, sont bruitées via l'utilisation d'un générateur d'aléas, par exemple initialisé avec le temps GNSS, non bruité, de création du message chiffré (dit, germe du générateur d'aléas), de manière à ne permettre l'accès à l'authentification qu'aux destinataires possédant les ressources de calcul permettant ces opérations ou/et pouvant accéder à la position et au temps non bruités par un média séparé.

Afin de sécuriser d'avantage le transfert, le temps non bruité utilisé pour le cryptage des données pourra être décalé, pour chaque code utilisé, d'un nombre entier d'époques, dit offset de phase de code, un tel décalage ne devant être connu que par les destinataires autorisés et être spécifique à la source émettrice.

Les principes de traitement de l'étape (106) sont détaillés en Fig.10.

La deuxième étape (108) consiste, à l'émission, à réaliser la génération des clés dites de cryptage spatio-temporel à partir du géoréférencement GNSS, clés définies comme correspondantes aux phases de chacun des codes PRN des satellites visibles à l'instant $t_0$, préalablement biaisées volontairement par des offsets de phase de codede calculables et compensables par les seuls utilisateurs autorisés, converties en nombre entier de chips de code PRN, dites phases de code en chip entier.

Ces phases de code entières, biaisées, servent par la suite du procédé à l'initialisation de la trame de cryptage de l'information utile par les codes PRN des signaux satellites reçus à $t_0$.

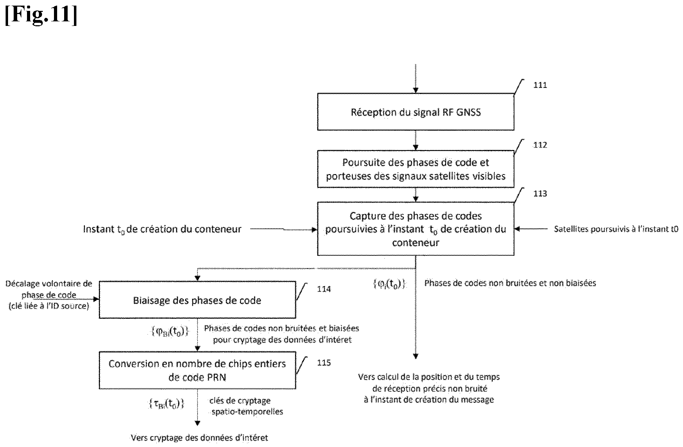

Les principes de traitement de l'étape (108) sont détaillés en Fig.11.

La troisième étape (110) consiste, à l'émission, à réaliser le cryptage de l'information d'intérêt à partir des clés spatio-temporelles générées, cryptage défini comme la combinaison bit à bit de l'information d'intérêt codée en binaire et le code PRN de au moins un des satellites visibles, choisis cycliquement ou pseudo-aléatoirement, initialisé sur la phase de code entière biaisées fournie dans la clé de cryptage spatio-temporelle. La combinaison bit à bit est précédée d'une conversion des bits de codage binaire [0,1] de l'information d'intérêt en codage en phase équivalent au BPSK [+1,-1] (dit pseudo BPSK et noté #BPSK) avant multiplication par les chips des codes PRN codés #BPSK [+1,-1].

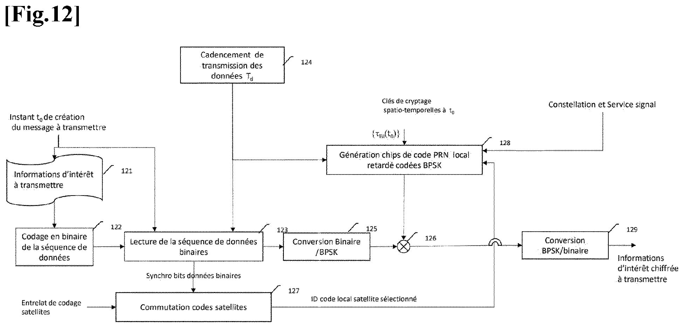

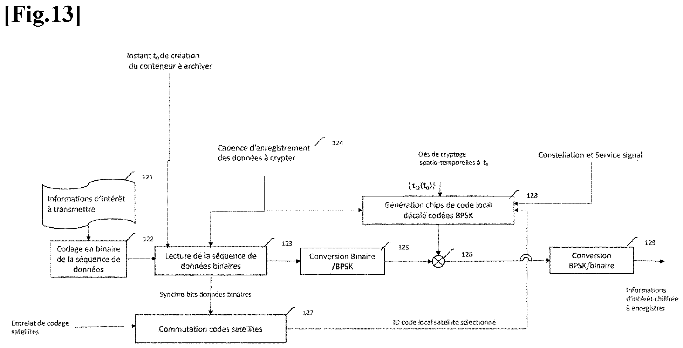

Les principes de traitement de l'étape (110) sont détaillés en Fig. 12 dans le cas d'un cryptage pour transmission (cadencement du cryptage des données par une base de temps extérieure) et en Fig.13 dans le cas d'un cryptage pour enregistrement ou archivage (cadencement du cryptage sur une base de temps interne au procédé).

La quatrième étape (112) consiste, à l'émission, à réaliser la capture de l'empreinte GNSS, empreinte définie comme une courte séquence temporelle du signal GNSS reçu, de longueur minimale d'une milliseconde, paramétrable en fonction de l'impact sur le débit de communication ou le volume supplémentaires de données à stocker et des types de signaux à prendre en compte, capturée précisément et en synchronisme (à quelques dizaines de nanosecondes près) de l'instant $t_0$ de capture des phases de codes et de calcul de la position et du temps de l'évènement par le récepteur GNSS.

Le signal GNSS est capturé en sortie de l'étage RF du récepteur GNSS après conversion analogique numérique dans une bande passante la plus large possible permettant de collecter les signaux de différents services de navigation et de différentes constellations.

La capture peut être préférentiellement réalisée sur plusieurs bandes de fréquence, sans que cela soit un impératif pour le procédé décrit.

Les principes de traitement de l'étape (112) sont détaillés en Fig. 14.

La cinquième étape (114) consiste, à la réception, à réaliser l'extraction des clés spatio-temporelles à partir de l'empreinte GNSS, l'extraction consistant à estimer, par corrélation avec les codes des signaux satellites visibles, les phases de code d'où seront dérivées les phases de code entières à appliquer pour réaliser le décryptage des données reçues.

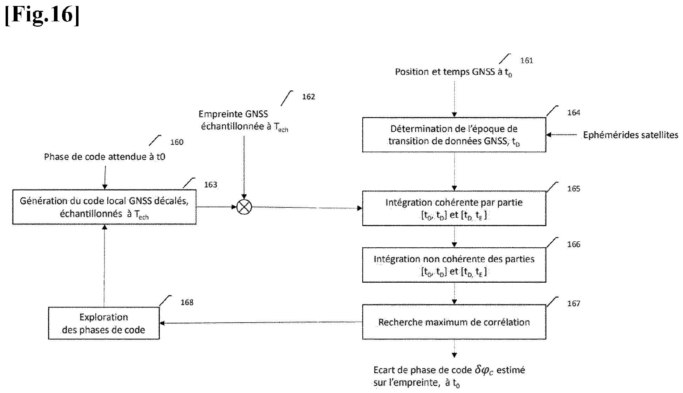

Cette opération pouvant être extrêmement demandeuse en calcul, elle peut être aidée par les informations de position et de temps de capture de l'empreinte, fournies bruitées dans l'identifiant du message, qui permettent de réduire l'espace de recherche de l'acquisition dans les domaines spatial et temporel. Fig.16 fournit le principe de traitement d'une acquisition aidée instantanée, dite snapshot, réalisée à partir de l'empreinte GNSS,

Lorsque l'amplitude du bruit ajouté sur la position et le temps transmis est nulle, l'acquisition des phases de code peut être réalisée directement, à partir des informations de position et de temps transmis, les informations d'éphémérides satellites et les modèles de correction étant connus par ailleurs.

Lorsque l'amplitude du bruit ajouté sur la position et le temps transmis est importante, l'acquisition des phases de code de l'empreinte peut être prohibitive en temps de calcul pour les destinataires qui ne disposent pas des ressources de calcul suffisantes ou du germe d'initialisation d'aléas de l'algorithme de génération.

Les phases de codes non bruitées ainsi extraites restent encore, à ce stade, indéterminées en raison des biais de phase ajoutés volontairement à l'émission, qui ne doivent être accessibles qu'aux utilisateurs autorisées ou encore attribué à tout destinataire dont l'identité est connue.

Une fois corrigées de ce dernier biais, les phases de codes résultantes peuvent être converties en phases entières de chip de code, pour l'initialisation des codes PRN à appliquer pour réaliser le décryptage.

Les principes de l'étape (114) sont présentés en Fig.5 et le traitement d'acquisition des phases de code à partir de l'empreinte est présenté en Fig.16.

La sixième étape (116) consiste à réaliser l'authentification multi-facteur de la position et du temps GNSS transmis à partir de l'empreinte GNSS, l'authentification étant réalisée par comparaison de la position et du temps calculés par un algorithme PVT à partir des phases de codes extraites de l'empreinte, avec la position et la date transmise dans l'identifiant du conteneur, corrigées du biais volontaire introduit à l'émission attribué au groupe des destinataires.

En pratique, les phases de codes bruitées, extraites, par un algorithme $PVT^{-1}$, de la position et du temps bruités transmis dans l'identifiant du conteneur, servent, comme pour le traitement d'extraction des clés de l'étape (114), d'aide à l'acquisition des phases de code depuis l'empreinte. Lorsque le traitement d'acquisition est réussi, les phases de codes extraites en temps résolus GNSS sont converties en distances à vue des satellites, grâce aux éphémérides et aux modèles de correction connus du système GNSS, puis les écarts en position et en temps sont calculés par PVT direct à partir des écarts de pseudodistance.

L'authentification est acceptée lorsque les écarts sont inférieurs à un seuil dépendant du bruit de modèles d'erreurs et fonction de l'écart-type de bruit volontaire ajouté à l'émission, si celui-ci n'est pas corrigé.

Les principes de traitement de l'étape (114) sont détaillés en Fig.15.

La septième étape (118) consiste à réaliser le décryptage de l'information utile à partir des clés spatio-temporelles extraites, dérivées des phases de code, elles-mêmes estimées à partir des informations bruitées de position et de temps de création du message chiffré, dans le cas où le destinataire dispose des caractéristiques du générateur d'aléas en amplitude et du germe d'initialisation, et à partir de l'empreinte GNSS, après acquisition snapshot aidée par les informations de position et temps débruitées fournies par l'identifiant du conteneur.

Ces phases de code estimées sans biais sont corrigées préalablement au décryptage des données d'intérêt, en leur ajoutant le décalage volontaire de phase de code (offset de code) introduit pour effectuer le cryptage par les codes PRN déphasés et décalés à l'écriture du message chiffré, puis converti en phase de code en chip entier.

De préférence, le traitement réalise le séquencement dans le temps des codes des satellites visibles, selon un cycle périodique ou pseudo-aléatoire

Les principes de traitement de l'étape (116) sont détaillés en Fig.17.

La huitième étape (120) consiste à réaliser une estimation du risque d'attaque cyber en fonction des réussites ou échecs constatés des différentes étapes du procédé, qui s'appuie sur une logique prenant en compte :

- l'authentification de l'empreinte sur les signaux ouverts,
- le décryptage des données d'intérêt,
- le géoréférencement de la source, utilisable lorsque la position et le temps de création sont connus, au moins approximativement, par ailleurs (dit geofencing),
- l'authentification de l'empreinte sur les signaux GNSS règlementés.

[Fig.2] fournit une description du principe général de génération, en écriture, des clés de chiffrage spatio-temporel basé sur les caractéristiques du signal GNSS reçu, consistant à extraire les phases de code des signaux GNSS en visibilité, capturées à l'instant précis de création du message à chiffrer pour transmission ou enregistrement.

Le couple formé par la date $(t_0)$ et le lieu géographique $(P(t_0))$ de la source (20) constitue la clé maitresse du chiffrement en raison de l'unicité de leur réalisation lorsqu'ils sont associés à l'évènement de chiffrage du message contenant les informations. Un tel évènement peut être ponctuel, car limité à une seule action (par exemple, la création d'un document), périodique (par exemple, l'envoi de données sur un réseau de communication), ou aléatoires (par exemple, l'envoi de données d'observation sur une plateforme mobile).

La date et le lieu de l'évènement, grandeurs physiques mais immatérielles référençant l'évènement, sont caractérisés, selon l'invention, par des mesures tangibles de temps et de position absolu délivrés par les systèmes GNSS (23), quel que soit le type des constellations, la nature des services, la nature et la bande de fréquence des signaux.

A cette fin, il est nécessaire que l'évènement soit relié physiquement à un récepteur GNSS (24) capable de saisir les mesures de temps et de position qui lui sont associées, lui-même relié à une antenne GNSS (22), placée en réception des signaux satellites GNSS (21) et servant de référence spatiale, quel que soit sa position relative choisie par rapport à celle de l'évènement (par exemple, sur le toit du bâtiment ou du véhicule à l'origine de l'évènement).

La mesure du temps absolu réalisée par le récepteur GNSS est reliée à l'instant de l'évènement au travers d'un dispositif de synchronisation de la mesure capable de transmettre un top physique (33) afin d'assurer une capture précise des mesures de position et de la date de création du message crypté et des clés de chiffrage associées. C'est ainsi l'instant de réception du top qui doit être datée précisément pour permettre le référencement et le chiffrage sur la base des signaux GNSS, la latence entre la réalisation de l'évènement et l'arrivée du top de synchronisation n'ayant que peu d'importance à cette seule fin.

La position et le temps de l'évènement fournis dans une échelle de temps absolu GNSS (en principe converti en temps UTC) et un référentiel géographique géodésique (en principe, WGS 84), délivrés par un récepteur GNSS (24) relié au signal de synchronisation et à l'antenne, permettent d'obtenir les phases de codes des signaux reçus des satellites au niveau de l'antenne et à l'instant de réception du top de synchronisation.

Les phases de codes sont données par les temps GNSS mesurés sur chacun des signaux satellite reçus à l'instant du top. Tous les signaux satellites étant synchronisés précisément sur le temps GNSS absolu à l'émission, par construction des systèmes GNSS, les temps reçus des satellites GNSS sont donc retardés par rapport au temps GNSS absolu par les durées de propagation des ondes.

Ces retards dépendent de la distance entre les satellites émetteurs des signaux, en orbites selon des trajectoires connues précisément, et l'antenne de réception, et incluent les caractéristiques des couches de propagation ionosphérique et troposphériques, et différentes erreurs de mesures liées à l'environnement de réception (trajets multiples) ou à l'électronique (biais d'horloge, biais RF, latences).

A une date donnée, il n'existe, pour la constellation GNSS et le service de navigation sélectionnés, qu'une réalisation unique de l'ensemble des retards de propagation des signaux satellites visibles depuis un même point de réception, les éphémérides des satellites étant parfaitement connus et déterministes, ainsi que de l'ensemble des phases de code des signaux satellites GNSS, ceux-ci étant parfaitement synchronisés sur le temps GNSS.

La constellation GNSS, le service de navigation, les fréquences de réception ainsi que les type de code d'étalement des signaux, voire les indices des satellites accessibles, constituent des attributs caractéristiques de classes d'utilisateurs permettant de définir différents niveaux d'accès au service de chiffrement basés sur les caractéristiques GNSS (25).

Les mesures de phase de codes des signaux satellites utilisés, selon les privilèges utilisateurs, pour la localisation et le transfert de temps servent à l'élaboration de clés secrètes pour le cryptage des données et de signatures pour l'authentification du message.

Les phases de code des signaux multi-satellites reçus simultanément à une date donnée constituent ainsi un ensemble de caractéristiques, multifactorielles, unique et infalsifiable de l'empreinte, indissociable de l'évènement, définissant les clés de chiffrement secrètes dérivées de la position et du temps de création du chiffrement.

La connaissance des éphémérides précis des satellites (26) et des modèles de correction (27) des sources d'erreur de propagation et électronique (calibration), permettent de relier la position et le temps GNSS, fournis par le récepteur, aux temps GNSS reçus pour chacun des signaux satellites, avec une précision de l'ordre de quelques dizaines de nano secondes.

Dans une mise en œuvre de l'invention où le récepteur GNSS est extérieur et indépendant du système de chiffrement du message, les phases de codes médianes, non bruitées, peuvent être obtenues par calcul à partir du temps et de la position délivrés par le récepteur GNSS par application de la transformation mathématique (28), dite classiquement PVT$^{-1}$, inverse à celle mise en œuvre par les récepteurs GNSS pour le calcul de la position et du temps,. Les phases de codes ainsi reconstituées à partir d'une position estimée sont dites phases de codes médianes car virtuellement reconstituées à partir les modèles d'erreurs propagation et des éphémérides, sans prendre en compte les bruits d'estimation de la phase de code ni les bruits de modèles.

La transformation inverse, PVT$^{-1}$, consiste à :

- calculer les distances géométriques à vue entre l'antenne et les satellites à la date GNSS fournie, la position des satellites à la date GNSS étant calculée à partir de leur éphémérides et la position de l'antenne étant celle fournie par le récepteur GNSS, puis,
- en déduire les retards de propagation correspondant après application des modèles de propagation et d'erreurs de réception, et enfin,

- convertir, pour chacun des satellites, ces retards en temps reçus GNSS absolus, à l'instant du top de synchronisation, délivré par le récepteur. Le temps reçu GNSS absolu est enfin transformé en phase de code (29) correspondant au retard donné en chip de code, en valeur réelle, depuis l'origine du temps de la constellation GNSS, modulo la période de code (par exemple 1ms, correspondant aux 1023 chips d'une période de code C/A GPS).

Les phases de code médianes entrainent donc une indétermination d'accrochage supplémentaire, liée à l'imprécision des modèles de correction et d'estimation, lors de la reconstitution des phases de codes utilisées pour le cryptage à partir de l'empreinte du signal GNSS

Dans une mise en œuvre préférentielle où le récepteur est intégré avec le dispositif de génération du message chiffré, le récepteur peut prélever instantanément les phases de code des signaux satellites en cours de poursuite au moment de la réception du top de synchronisation, et les fournir avec la position et le temps calculés sans avoir à réaliser de transformation inverse.

Les phases de codes obtenues, $(\varphi_{c\_nb})_{GNSS}$ sont dites «non bruitées» par abus de langage, bien que les mesures instantanées fournies par un récepteur soit toujours affectées de bruit d'estimation et d'erreurs de modèles de correction de propagation, réparti autour des valeurs médianes de phases, par opposition avec les phases de codes dites ultérieurement « volontairement bruitées » qui serviront de clés au cryptage des données (30), dont le principe est détaillé Fig. 11.

Parallèlement à l'élaboration des clés de cryptage, une empreinte du signal GNSS, basée sur le signal RF issu de l'antenne de réception, donnant accès, pour les différentes classes d'utilisateurs, aux caractéristiques de phases de codes utilisées pour construire les clés de cryptage, est capturée (31) afin d'assurer l'authentification (32) du message crypté et de son origine, dont le principe est détaillé Fig.15.

[Fig.3] présente le principe général de cryptage en écriture, des données d'intérêt basé sur les caractéristiques du signal GNSS reçu. Il consiste à utiliser les codes PRN et les phases de codes correspondant des satellites en visibilité comme sources pour crypter les données d'intérêt du message à protéger à l'émission.

Le cryptage (31) consiste à combiner bit à bit, au rythme d'écriture du message, les données du message d'intérêt, converties en binaire, avec les chips des codes des satellites visibles, retardés en nombre entier de chip en fonction des phases de code mesurées des signaux, les codes étant eux-mêmes entrelacés selon un séquencement prédéfini ou pseudo-aléatoire.

Ce principe, illustrés par les chronogrammes en [Fig.7], [Fig.8] et [Fig.9], est détaillé [Fig.12]

[Fig.4] présente le principe de bruitage en écriture de la position GNSS estimée à l'instant ($t_0$) de création du message déclenché sur le top de synchronisation (40) consistant à ajouter (41), après calcul de la position et du temps par le récepteur GNSS (49), des bruits gaussiens sur chacune des coordonnées de la position estimée non bruitées (40), indépendant d'une coordonnée à l'autre, mais de même écart-type, réglable et connu des seuls utilisateurs.

La valeur de consigne de l'écart-type du bruit de position (42) ajouté est définie en retenant une valeur moyenne de la dilution de précision (dit DOP) de manière à entrainer, une erreur de position et de temps objective, suffisante pour empêcher l'acquisition des clés au travers de l'empreinte transmise par des destinataires non autorisés. Les phases biaisées des codes satellites correspondantes (45) sont calculées par transformation inverse (PVT$^{-1}$) à partir de la position bruitée (44) et de la connaissance des éphémérides satellites et des modèles de correction de propagation des signaux GNSS.

Le générateur d'aléas est initialisé par un germe (43) dont la connaissance permet de reconstituer à l'identique la séquence de tirages pseudo-aléatoires par les destinataires autorisés.

Le germe d'initialisation de la génération d'aléas (germe) est fourni par le temps GNSS estimé par le récepteur (49) à l'instant (40) de synchronisation du message arrondi par périodes rondes de temps choisie entre 10ms et 100ms

Les offsets de phase de code appliqués (48) pour le cryptage des données sont déterminés, pour chaque satellite poursuivi, comme une proportion de la différence de phase de code existant entre la phase de code biaisées correspondant à la position bruitée volontairement à la date arrondie E(t0) et la phase de code estimée par le récepteur GNSS à la date estimée T(t0).

Le coefficient de proportion unique appliqué pour le calcul d'offset de phase de code est défini de sorte à éviter qu'un tiers puisse accéder aux valeurs des offset de phase de code par dérivation de la valeur de la position bruitée transmise dans le conteneur, et de la position estimée d'acquisition à partir de l'empreinte transmise.

La valeur de ce coefficient, qui évolue à chaque activation du tirage aléatoire du bruit de position, est obtenue grâce au générateur de nombre pseudo-aléatoire de distribution uniforme sur l'intervalle ]0,1[, initialisé sur le temps rond transmis E(t0) (43), qui sert au tirage de bruit (44) selon une loi normal Gaussienne N(0,1) pour le bruitage de la position.

Cet offset est calculé (48) par soustraction des phases de code biaisées (45) et des phases de code estimées (41), exprimée en nombre entier de chips de code, éventuellement complétée par un décalage supplémentaire en chip entier représentatif de la phase de code précise estimée par le récepteur à l'intérieur du chip de code, codé en mètre entier.

[Fig.5] présente le principe général de reconstitution, en lecture, des clés de chiffrage spatio-temporel basées sur l'empreinte GNSS mémorisée à la création du message, consistant à réaliser, à partir de l'empreinte GNSS du signal RF capturé à la création du message, une acquisition instantanée, dite snapshot, des codes PRN des satellites visibles, de manière à estimer les phases de code non bruitées ( $\widehat{\varphi_{c-nb}}$ ) des signaux capturés dans l'empreinte, à la date de création du message (54).

Sur la base de la connaissance des germes d'initialisation appliqués par le générateur de bruit à la création du conteneur pour bruiter la position estimée non bruitée etles phases de code médianes correspondantes peuvent être reconstituées par PVT inverse (PVT$^{-1}$) (51), et ainsi permettre de fournir une aide de phase de code non bruitée ($\varphi_{c\_nb}$) pour faciliter l'acquisition snapshot.

L'acquisition snapshot (52) est aidée par les phases de codes médianes obtenues par PVT$^{-1}$ (51) depuis les informations de position et de temps bruitées (P&T)$_b$ fournies dans l'identification du conteneur, en parallèle de l'empreinte.

Le traitement d'acquisition snapshot est détaillé en [Fig.16]

La durée de l'empreinte GNSS étant réduite, les phases de code obtenues à partir de l'empreinte (54) possèdent un bruit d'estimation supérieur à celui du récepteur au moment de la création du message, obtenue après poursuite des signaux avec des bande de filtrage de boucle bien plus étroites.

La résolution du recalage en phase de chip entière appliquée pour le cryptage des données par le code étant limitée à la largeur d'un chip de code PRN, elle reste cependant d'un ordre de grandeur inférieur à l'imprécision d'estimation de la phase de code obtenue à partir de l'empreinte GNSS.

Lors de l'étape de décryptage, et pour traiter les cas de bruit d'estimation encadrant la transition d'un chip entier, une recherche locale supplémentaire sur les chips de code situés de part et d'autre de la phase de chip entière extraite peut être réalisée pour lever l'indétermination résiduelle, permettant de corriger l'écart possible avant décryptage complet de la séquence de données cryptées.

[Fig.6] décrit l'organisation générale du traitement de chiffrement (par le fournisseur du message) / déchiffrement (par le destinataire du message) spatiotemporel basé sur la capture conjointe de la position et du temps GNSS et d'une empreinte du signal GNSS, reprenant en cela les principales étapes de la [Fig. 1].

Le signal GNSS reçu par l'antenne GNSS (60) sert de support à l'acquisition du temps et de la position associée à la création du message.

Les phases de code non biaisées ($\varphi_{c\_nb}$)$_{GNSS}$ des signaux satellites poursuivis sont capturées (62) à l'instant précis de réception du signal de synchronisation de mesure par le récepteur. Le récepteur cadençant généralement ses taches sur sa propre base de temps, et sur des échéances de prélèvement attachées à chaque satellite, les phases de code liées à la date précise et unique de réception du signal de synchronisation de mesure (dit, top de mesure) doivent être interpolées à partir des mesures d'encadrement.

Les phases de codes sont affectées volontairement de biais supplémentaires (65), compensables par les seuls utilisateurs autorisés, obtenus à partir de la connaissance du modèle de bruit ajouté à la position transmise (66) et de son germe d'initialisation, fourni par le temps GNSS arrondi $E(t_0)$ de l'instant de création du conteneur, ainsi que de l'écart-type de ce bruit, tenu secret, ceci afin de rendre impossible toute tentative de synchronisation du code de cryptage par un tiers ne disposant pas de ces informations.

En parallèle une tranche du signal RF numérisé est prélevée (63) à partir de l'instant de réception du top de mesure sur une durée courte supérieure à 1ms pour contenir au moins une période des codes PRN GNSS les plus courts, mais pouvant être plus longue, jusqu'à 20ms, sur une période de données GNSS, si le débit de communication ou le volume de données à mémoriser le permet,

Lors de la génération des codes servant au cryptage des données d'intérêt, les codes GNSS sont préalablement décalés (641) au plus près d'un nombre entier de chip correspondant, pour chaque satellite, à la somme de la phase de code précise non bruitée $(\varphi_{c\_nb})_{GNSS}$ , poursuivie par le récepteur à l'instant de création du conteneur, et de l'offset de biais de code $(\delta\varphi_c)$.

Les données utiles converties en binaires sont cryptées (64), par les codes PRN satellite retardées selon les phases de code biaisées conformément au principe présenté [Fig.4].

Dans le cas où le destinataire a connaissance des germes d'initialisation des générateurs d'aléas, il est possible de débruiter les phases de codes obtenues par PVT$^{-1}$, et de les comparer à celles extraites à partir de l'empreinte GNSS en calculant l'écart en distance et temps , et vérifier (69) que l'écart reste compatible du bruit d'estimation sur la position et le temps,

Dans le cas où le destinataire n'a pas connaissance des germes d'initialisation des générateurs d'aléas, mais connait l'écart-type du bruit, il n'est pas possible de débruiter les phases de codes obtenues par PVT$^{-1}$, et l'authentification (69) n'est réalisable qu'avec une confiance moindre sur l'écart en distance et temps, et ceci seulement si l'écart-type du bruit Gaussien ajouté volontairement par le fournisseur du message est connu du destinataire. Dans les autres cas, l'authentification du conteneur n'est pas réalisable.

A la lecture du conteneur, le destinataire reconstruit par application de l'algorithme PVT-1 (67), les phases de codes médianes bruitées $(\varphi_{c\_b})$ à partir de la position bruitée et des éphémérides satellites et des modèles de correction de propagation. Le partage du modèle de génération de bruit aléatoire entre émetteurs et destinataires, ainsi que la transmission du germe d'initialisation du générateur de bruit $E(t_0)$ et la connaissance de l'écart-type de génération de ce bruit permet au destinataire d'accéder à la position X,Y,Z estimée non bruitée et de déterminer, par application de l'algorithme PVT-1, les phases de code médianes correspondantes, au plus près des phases de codes estimées non biaisées.

Ces phases de code médianes correspondant à la position estimée sont utilisées pour aider à l'acquisition snapshot des signaux satellites à partir de l'empreinte du signal GNSS (68) afin d'en extraire les informations de phase de code réelles et précises non biaisées $(\varphi_{c\_nb})$. En cas d'échec de l'acquisition snapshot, ni l'authentification du message, ni le décryptage ne sont possibles.

A la suite de l'acquisition des phases de codes précises non biaisées réalisée à partir de l'empreinte GNSS, et après avoir obtenu des phases de codes médianes dérivées de la position bruitée, on peut calculer (67) une proportion des écarts de phases de codes, correspondant aux biais de phase de code ajoutés volontairement pour crypter les données, au moment de l'écriture du conteneur.

Il devient ainsi possible de réaliser le déchiffrage, détaillé en [Fig.17], des données cryptées (610) par les codes PRN retardés (612) des phases de code du signal reçu par le fournisseur du message, à condition cependant de connaitre le biais volontaire ajouté sur les mesures de phase à la construction du message.

Enfin, en cas d'échec de l'authentification ou du déchiffrage du message par un destinataire autorisé, une étape d'évaluation du risque cyber (611) est réalisée en fonction des états observés.

[Fig.7] illustre le synchronisme des signaux GNSS en émission et en réception dans le cas de codes périodiques, ainsi que la plage de capture de l'empreinte GNSS à la date $t_0$ de création du message chiffré, dans le cas de différents retards de propagation des signaux satellites i (72), j (73) et k (74) , ainsi que pour le signal transmis au niveau satellite (71).

La structure classique de la voie données d'un signal GNSS à code périodique est présentée, composée des occurrences (j) des codes périodiques $C_k^j(i)$ du satellite (i) contenus dans la donnée $D_k(i)$ d'occurrence (k) du message GNSS du satellite (i).

$\varphi_0(t_0)$ est la phase de code absolue du signal synchronisé sur le temps GNSS, émis par le satellite (i).

$\delta\varphi_0(t_0)$ est la phase de codes périodiques (modulo la longueur de code) à l'émission du satellite (i) à la date $t_0$, définie par :

$$\delta\varphi_0(t_0) = modulo(\varphi_0(t_0), T_C)$$

où,

t_0 est l'instant de prise de mesure correspondant à la date de création du message. $T_C$ est la durée du code périodique

$\varphi_i(t_0)$ est la phase de code absolue du signal reçu sur l'antenne, à la date $t_0$ dans la base de temps GNSS, pour le satellite (i).

$\delta\varphi_i(t_0)$ est la phase de code périodique (modulo la longueur de code) du signal reçu sur l'antenne du satellite (i), fonction du retard de propagation, à la date $t_0$ dans la base de temps GNSS, pour le satellite (i), définie par :

$$\delta\varphi_i(t_0) = modulo(\varphi_i(t_0), T_C)$$

Les signaux capturés dans la plage de capture, commune à tous les satellites, possèdent ainsi des phases de code périodique différentes selon les satellites et des phases de donnée GNSS dont l'état et la transition dépendent de la phase de code.

[Fig.8] présente le chronogramme de cryptage des données par les chips de code du satellite sélectionné, décalés de la phase de code reçue à $t_0$. Pour cela, un détail (81) du chronogramme de la [Fig.7] précédente est élargi au niveau du séquencement des chips de codes (82) et non plus des périodes de codes.

L'instant précis de prise de mesure $t_0$ correspond à un retard de phase de code $\delta\varphi_i(t_0)$ qui ne correspond pas à un nombre entier k de chips de code PRN $Cb_k$ (i).

(83) indique que le premier chip de code retenu pour chiffrer les données binaires du message ($Mb_k$) correspond à la valeur entière de la phase de code exprimée en chip de code $\Phi_i(t_0)$.

La phase de code en chip entier $\Phi_i(t_0)$ est définie par :

$$\Phi_i(t_0) = INT(modulo(\varphi_i(t_0), T_b))$$

L'étape (84) représente la séquence de bits de données à chiffrer, $Mb_k$, codées #BPSK.

L'étape (83) représente la séquence $b_j(i)$ de chips d'indice (j) du code PRN du satellite (i), générée à partir de la phase de code en chip entier $\Phi_i(t_0)$.

$$b_j(i) = B_{\Phi_i(t_0)}(i) = C_i(j + \Phi_i(t_0) - 1)$$

L'étape (85) représente la séquence de données du message chiffré ($Kb_j$) obtenue après multiplication bit à bit des séquences :

$$Kb_j(i) = Mb_j \times b_j(i)$$

[Fig.9] présente le cryptage des données par tranches successives, par la séquence des chips de code du satellite associé à chacune des tranches, décalée au début de chacune des tranches par la phase de code du satellite correspondant reçue à $t_0$.

De façon identique à [Fig.8], le code PRN est multiplié avec les bits du message binaire après conversion PBSK.

Le code PRN d'un même satellite (i) est appliqué sur une tranche temporelle de durée limitée ($T_i$). A l'issue de chaque tranche temporelle, le code d'un autre satellite est appliqué décaler au départ de la valeur de sa phase en valeur entière de chip de code.

L'étape (91) représente la séquence de chips de code allouée à chacune des tranches temporelles codées #BPSK.

L'étape (92) représente la séquence de bits de message à chiffrer convertie #BPSK.

L'étape (93) représente le résultat de la multiplication bit à bit.

L'étape (94) représente les tranches de données cryptées avec différents code PRN satellite

[Fig.10] détaille la méthode de génération de l'identification de la source d'information utile, consistant à ajouter à l'information d'intérêt un identifiant, constitué de la référence de la source et de la position et de la date GNSS précises de création du message chiffré.

Etape (101), le récepteur GNSS réalise la réception du signal analogique dans les bandes de fréquence adaptées au service de navigation à utiliser et réalise la conversion numérique.

Etape (102), le récepteur GNSS réalise la poursuite en code et porteuse des signaux satellites visibles, sur des époques cadencées au rythme de réception de chacun des signaux satellites reçu.

Etape (103), le récepteur GNSS réalise la capture des phases de codes des satellites en cours de poursuite, à l'instant de réception d'un pulse de création du message, en effectuant une interpolation entre les époques de mesures de phases de code qui encadrent la date de réception du pulse.

Etape (104), le récepteur calcule la position et le temps $P(t_0)$, $T(t_0)$ associés au pulse de synchronisation de création du message à partir des phases de code interpolées à $t_0$. et génère un pulse TMP (acronyme en langue anglaise de Time Marked Pulse) synchronisé sur l'instant $t_0$ servant au lancement du prélèvement d'une courte séquence du signal d'antenne RF d'entrée (dite l'empreinte du signal GNSS).

Etape (105), la position de réception $P(t_0)$ estimée à l'instant $t_0$ est bruitée ($P_b(t_0)$) selon chacun des axes du repère géographique X, Y, Z par un générateur de bruit Gaussien initialisé sur un germe dépendant d'un arrondi $E(t_0)$, choisi selon un écart situé entre 10ms et 100ms, d la date estimée en temps GNSS $T(t_0)$ de de calcul de la position $P(t_0)$.

Etape (106), les phases de codes biaisées {$\varphi_b(E(t_0)$} correspondant à la position bruitée $P_b(t_0)$ sont calculée par $PVT^{-1}$ en vue de lier la position bruitée transmise avec les phases de code biaisées utilisées pour le cryptage des données d'intérêt, équivalent à l'ajout de biais sur les phases de code correspondants à l'écart entre la position estimée $P(t_0)$ à $t_0$ et la position bruité $P_b(t_0)$.

Etape (107), l'identificateur du conteneur du message est constitué de la référence de la source ainsi que de la position bruitée $P_b(t_0)$ et du temps estimé arrondi $E(t_0)$.

[Fig.11] détaille la méthode de génération des clés de cryptage spatio-temporelles à partir du géoréférencement GNSS, par capture des phases de code des signaux GNSS poursuivis à l'instant de création du message chiffré.

Etape (111) le récepteur GNSS réalise la réception du signal analogique dans les bandes de fréquence adaptées au service de navigation à utiliser et réalise la conversion numérique.

Etape (112) le récepteur GNSS réalise la poursuite en code et porteuse des signaux satellites visibles, sur des époques cadencées au rythme de réception de chacun des signaux satellites reçu.

Etape (113) le récepteur GNSS réalise la capture des phases de codes des satellites en cours de poursuite, à l'instant de réception d'un pulse de création du message, en effectuant une interpolation entre les époques de mesures de phases de code qui encadrent la date de réception du pulse.

Les phases de codes non bruitées sont utilisées pour le calcul de la position et du temps vrais, précis et non bruité. Letemps vrai, quantifié (dit temps rond) par pas ajustable entre 10ms et 100ms, est utilisé comme germe pour la génération des aléas de bruit de phase. L'arrondi sur le temps permet de masquer le temps précis associé au conteneur, et d'introduire une incertitude sur les positions satellites calculables au travers des éphémérides, suffisante pour reconstituer des pseudo-distances à partir d'observation des phases de codes qui auraient pu être extraites de l'empreinte du signal GNSS, ceci dans le but d'accéder à la position non bruitée. Ledit temps rond est transmis aux destinataires autorisés en vue d'éliminer le bruit de position ajouté sur la position transmise et pour permettre l'acquisition des phases de code non bruitées à partir de l'empreinte, servant à l'authentification et au déchiffrage.

Etape (114) les phases de code mesurées non bruitées sont modifiées pour chacun des satellites poursuivis par ajout de biais de phase correspondant à une proportion de l'écart de phase de code entre la position bruitée Pb(t0) et la position non bruité $P(t_0)$, non accessible aux tiers non autorisés.

Etape (115) les phases de code biaisées sont converties en phase de code en chip entier pour cryptage des données d'intérêt.

[Fig.12] décrit un premier mode de mise en œuvre du cryptage de l'information d'intérêt à partir des clés spatio-temporelles à des fins de transmission des données chiffrées dès la création du conteneur, réalisé par combinaison entre les données d'intérêt codées en binaires et les codes PBSK retardés selon les phases de code capturées à l'instant de création du message chiffré,

L'étape (121) représente de fichier d'entrée contenant l'information d'intérêt à protéger.

L'étape (122) réalise le codage en binaire de l'information d'intérêt.

L'étape (123) réalise la lecture des données binaires au rythme de transmission requis, cadencé par la base de temps de l'émetteur (124), à partir de la réception du pulse de création du message.

L'étape (125) réalise la conversion du codage binaire [0 ,1] en codage #BPSK [+1 ,-1] des données afin de réaliser une multiplication bit à bit avec les chips du code PRN réalisant le cryptage de la donnée.

L'étape (128) réalise, pour la constellation et le service de navigation autorisés pour mettre en œuvre le cryptage, la génération de la séquence de chips du code PRN correspondant au code ID du satellite défini à l'étape (127) selon le séquencement défini par l'entrelacs, pour la tranche de cryptage $(TK_i)$ courante, au rythme $(T_d)$ et synchronisée sur le cadencement de transmission des données (124). La séquence de chip est initialisée sur la phase de code en chip entier $\{\tau_{Bi}(t_0)\}$.

L'étape (126) réalise la multiplication bit à bit en codage #BPSK entre la séquence de donnée et le code PRN local, avant transmission.

L'étape (129) réalise la conversion de l'information cryptée résultante en code binaire.

[Fig.13] décrit un second mode de mise en œuvre du cryptage de l'information d'utilité à partir des clés spatio-temporelles générées, à des fins d'enregistrement, réaliser sans contrainte de cadencement. La méthode est similaire à celle décrite en [Fig.12] à la seule différence près que le cadencement de codage n'est plus dicté par le rythme de transmission des données, mais par seul rythme de l'horloge locale (124) pilotant l'enregistrement.

[Fig.14] présente la méthode de capture de l'empreinte GNSS réalisée après conversion analogique numérique du signal GNSS reçu.

Etape (141), le récepteur GNSS réalise la réception du signal GNSS pour la bande de fréquence correspondant au service de navigation GNSS à mettre en œuvre pour le cryptage et l'authentification.

Etape (142), le signal RF est numérisé classiquement sur 4 à 12 bits

Etape (143), un pilote lance l'enregistrement précisément à l'instant de réception du pulse reçu à la création du message $(TMP(t_0)$, pour Time Mark Pulse en langue anglaise). La précision en question reflète l'écart de synchronisation, sur la base de temps local du récepteur, entre l'instant retenu pour capter les phases de codes des signaux satellites et l'instant de début de prélèvement de l'empreinte.

Cet écart doit rester négligeable par rapport à la durée d'un chip de code du signal GNSS (par exemple, 10ns permet de rester compatible de la plupart des codes GNSS et des fréquences d'échantillonnage des signaux RF).

La durée d'enregistrement de l'empreinte, commandable, est ajustée extérieurement en fonction du service de navigation, selon l'impact sur le débit de communication ou d'enregistrement autorisé (une empreinte de 1ms codée sur 12bits et numérisée à 100MHz occupe un volume de 1.2 Mbits).

[Fig.15] décrit un mode de réalisation de l'authentification multi-facteur de la position et du temps GNSS à partir des clés spatio-temporelles extraites réalisant la comparaison entre la position et le temps GNSS à l'instant de création transmis en clair (mais éventuellement bruités) dans le conteneur, et la position et le temps estimés à partir de l'empreinte GNSS.

L'entrée (150) est constituée de la position et du temps calculés par le récepteur GNSS à partir des phases de codes capturées à la date de réception du pulse de création du message, ces informations pouvant avoir été éventuellement bruitées volontairement selon une distribution Gaussienne d'écart-type commandable et avec des germes de génération d'aléas liés au temps résolu non bruité et aux satellites.

L'entrée (151) est l'empreinte GNSS captée à la même date de réception, en sortie de la chaine RF du récepteur GNSS.

L'étape (152) reconstitue, par application de l'algorithme du PVT$^{-1}$, les distances à vue entre l'antenne et les satellites, en utilisant les éphémérides satellites connus (158), d'où sont dérivés les retards de propagation à l'aide des modèles de correction de propagation et de correction d'horloges satellites connus.

Les retards de propagation permettent de calculer les phases de codes correspondant à la date de réception du pulse de création du message ($t_0$).

L'étape (153) réalise l'acquisition snapshot des codes des signaux satellites visibles par corrélation glissante du signal de l'empreinte avec les codes PRN des satellites visibles, initialisés sur les phases de codes fournies par (152), et dans une fenêtre de recherche liée à l'incertitude de l'estimation de position et de temps fournies et accessible par l'empreinte sur sa durée, ainsi qu'à l'écart-type de position et de temps du bruit de phase ajouté volontairement. L'acquisition snapshot est détaillée [Fig.16]

Les décalages des maximas de corrélation représentent l'écart de phase de code entre les phases de codes captées par le récepteur à la date de création du message chiffré et les phases de codes extraites de l'empreinte.

L'étape (154) détermine les pseudo-distances observables de l'empreinte (et non des distances, la date de réception de l'empreinte n'étant pas parfaitement aligné sur la date $t_0$ de capture instantanée, du fait du décalage de la tranche de temps snapshot) antenne-satellites par axe à vue, après application des modèles de correction de propagation et de correction d'horloges satellites.

L'étape (155) réalise le calcul des écarts de pseudo-distance par axe à vue.

L'étape (156) réalise le calcul de l'écart de position et de l'écart de temps résiduel à partir des écarts de pseudo-distance à vue, par application de l'algorithme PVT direct.

L'étape (157) réalise l'évaluation de la compatibilité entre les différences de position et de temps relativement aux marges d'erreurs d'estimation et au bruitage volontairement ajoutés

[Fig.16] décrit un mode de réalisation de l'acquisition snapshot des phases de code à partir de l'empreinte GNSS, aidée par la position et le temps GNSS transmis dans le conteneur, dans le cas d'un signal GNSS contenant des données de navigation impliquant un alignement de l'intégration cohérente de la corrélation sur les transitions de données du message GNSS.

Une difficulté de l'acquisition snapshot menée sur une capture du signal GNSS reçu est liée au fait que les données des messages transportées par le signal GNSS peuvent créer des basculements de phases qui compromettent la performance de l'acquisition aidée par corrélation.

Il est donc nécessaire d'identifier préalablement à la recherche par corrélation glissante, la position attendue de chacune de ces transitions (prédictibles à partir des positions et temps GNSS résolus, éventuellement bruités, fournis dans le conteneur), permettant de réaliser l'intégration cohérente de la corrélation par parties, puis de les sommer de façon non cohérente, de façon à minimiser la perte d'estimation.

L'entrée (160) correspond aux phases de codes attendues obtenues à partir de la position et du temps GNSS résolus transmis par le conteneur, déjà présentée en [Fig.15].

L'entrée (161) est la position et le temps GNSS résolus transmis par le conteneur.

L'entrée (162) est l'empreinte GNSS.

L'étape (163) réalise la génération du code local associé au signal satellite à acquérir, échantillonné à la même fréquence que le signal de l'empreinte, la phase de code de recherche étant définie dans un domaine de retard encadrant la phase de code attendue.

L'étape (164) réalise l'estimation de l'époque de transition de données à l'intérieur de la durée de l'empreinte à partir de la prédiction de la phase de code reçue obtenue par application de l'algorithme du PVT$^{-1}$ (de façon identique à l'étape (152) de la [Fig.15]).

La phase de code absolue $\varphi_c(t_0)$ (par rapport à l'origine du temps GNSS) reçue à la date $t_0$ est convertie modulo la durée ($T_D$) d'une période de donnée GNSS, fournissant ainsi la position de la phase de code reçue par rapport au début de la donnée GNSS en cours. On vérifie alors si la prochaine transition de donnée tombe ou non dans la durée de prélèvement de l'empreinte ($T_E$,) en testant si $\delta\varphi$ l'incrément de phase restante après $t_0$ est inférieure à la durée de l'empreinte :

$$\delta\varphi_D = T_D - modulo(\varphi_c(t_0), T_D)$$

Si $\delta\varphi_D < T_E$ alors $\delta\varphi_D$ est converti en phase de code.

Si $T_b$ est la période de chip de code, la phase de code correspondant à la prochaine transition de donnée exprimée en chip de code, est :

$$\varphi_D(t_0) = \frac{\delta\varphi_D}{T_b}$$

L'étape (165) réalise alors l'intégration cohérent par parties :

$$F_{c-}(\delta\varphi) = \int_0^{\varphi_D(t_0)} E(t).C^*(t - \delta\varphi)\, dt$$

$$F_{c+}(\delta\varphi) = \int_{\varphi_D(t_0)}^{TE} E(t).C^*(t - \delta\varphi)\, dt$$

L'étape (166) réalise l'intégration non cohérente, l'expression de la fonction de corrélation est alors :

$$\mathrm{F}_c^2(\delta\varphi) = |F_{c-}(\delta\varphi)|^2 + |F_{c+}(\delta\varphi)|^2$$

où,

E(t) est le signal d'empreinte
C(t) est le code du signal satellite considéré
$\delta\varphi$ est le décalage de phase introduit pour le balayage du domaine d'incertitude

L'étape (167) détermine, pour chacun des satellites visibles, l'écart de phase de code $\delta\varphi_c$ existant entre la phase de code mesurée par le récepteur et la phase de code extraite de l'empreinte par recherche du maximum de corrélation par balayage du décalage de phase de code :

$$\delta\varphi_c = Max_{\delta\varphi}(\mathrm{F}_c^2(\delta\varphi))$$

[Fig.17] récapitule un mode de réalisation d'ensemble possible, mais pas unique, du décryptage de l'information utile à partir des clés spatio-temporelles, obtenues par extraction des phases de code des signaux issues de l'empreinte GNSS.

L'étape (172) teste la disponibilité du germe du générateur d'aléas du bruit ajouté.

L'étape (1711) réalise le calcul de la position non bruitée estimée par tirage du bruit de position à l'identique de la création du conteneur en appliquant le même algorithme de génération de bruit et le même germe d'initialisation.

L'étape (171) réalise le calcul par PVT$^{-1}$ au temps rond E($t_0$), des phases de codes médianes non bruitées à partir de la position non bruitée estimée

L'étape (174) réalise l'estimation des phases de codes non biaisées précises par acquisition snapshot à partir de l'empreinte GNSS, conformément à la description de la [Fig.16], et fournit les phases de code non biaisées estimées à $t_0$.

L'étape 173 réalise le calcul des écarts de phase de code correspondant à la position bruitée au temps E(t0) et des phases de codes non biaisées au temps $t_0$ extraites de l'empreinte la entre, et calcul les offsets de phase de code par application d'un facteur de proportion issu du même tirage aléatoire équiréparti sur ]0,1[ déjà fourni par le générateur de bruit au moment du débruitage de la position (1711).

L'étape (175) réalise le calcul des phases de code de cryptage par addition des phases de codes estimées non bruitées acquises via l'empreinte (174) et des offsets de phase de code dérivées de la position bruitée (173)

L'étape (176) réalise la conversion de la phase de code de cryptage en chips entiers pour chacun des satellites visibles à $t_0$, considérées comme les clés de cryptage spatio-temporel à prendre en compte pour réaliser le décryptage des données d'intérêt chiffrées.

L'étape (177) réalise, selon le satellite désigné en fonction de la trame de codage des satellites à l'étape (1710,) la génération du code PRN décalé de la phase de code en chip entier lui correspondant, au rythme de l'horloge de restitution des données.

En parallèle, l'étape (178) réalise la lecture des données d'intérêt chiffrées, converties préalablement en codage #BPSK, sur le même rythme.

Les deux séquences peuvent alors être multipliées bit à bit en étape (1711) et, après conversion en binaire, fournir les informations d'intérêt déchiffrées (1712)

[Fig.18] décrit une méthode particulière, mais pas exclusive, d'évaluation du risque cyber en fonction de la réussite des opérations d'authentification et de décryptage selon la nature des signaux GNSS mis en œuvre.

L'étape (181) considère de façon prioritaire la réussite de l'authentification menée sur l'empreinte en utilisant des signaux GNSS ouverts. Un échec de l'authentification conduit à soupçonner une attaque par falsification de la position et/ou du temps contenus dans l'identifiant du message.

En cas de succès, l'étape (182) vérifie la réussite du décryptage des données d'intérêt. Un échec du décryptage des données suivant une réussite de l'authentification conduit à soupçonner une falsification de l'identification par copiage d'une identification valide d'un autre message, ou reconstitution d'une empreinte cohérente de la position et temps transmis, mais sans avoir pu accéder aux données.

En cas de succès, l'étape (183) vérifie (opération dite de Geofencing, en langue anglaise) que la position et le temps transmis dans l'identifiant sont cohérents avec des informations connues du fournisseur (position d'antenne fixe, date de création prédéfinie, envoi sur d'autre canaux de communication), révélant en cela des risques de recevoir des signaux de répéteurs GNSS (dit Meaconing en langue anglaise).

Un échec conduit à soupçonner un risque de leurrage des signaux GNSS ouverts, toutes les informations et données restant cohérentes bien que fausses.

En cas de succès, une étape de vérification supplémentaire (184) permet de lever le doute, en réalisant l'authentification de l'empreinte GNSS à partir des signaux cryptés ou réglementés qui y sont contenus, par les utilisateurs habilités. Le soupçon de leurrage des signaux ouverts peut être confirmé en cas d'échec de l'authentification utilisant les signaux cryptés.

[Fig.19] décrit une implémentation, préférée mais non limitative, du système servant, en émission, à l'identification et au cryptage par chiffrage spatio-temporel en écriture, mettant en œuvre un récepteur de positionnement GNSS et des moyens de calcul associés pour réaliser le traitement de chiffrage.

Le système mis en œuvre en émission comprend un récepteur GNSS et un module de traitement spécifique de préférence entièrement logiciel (SW) et implanté dans le système de communication en parallèle du récepteur GNSS, ou bien un module matériel (HW) spécifique (dit add-on en langue anglaise) permettant de réaliser de façon protégée les opérations de cryptage par traitement câblé HW.

Le système décrit met en œuvre :

- (191) une antenne GNSS
- (192) un récepteur GNSS
- (193) le module de génération de codes PRN local du récepteur, activable à la demande sur requêtes extérieures
- (195) un add-on SW et/ou HW réalisant l'authentification et le cryptage des données d'intérêt (194 ) à transmettre ou à enregistrer selon les principes de l'invention, et délivrant aux destinataire le conteneur contenant l'information cryptée (197)
- (196) un sous-module réalisant le cryptage du message d'intérêt par les codes GNSS déphasés

[Fig.20] décrit une implémentation, préférée mais non limitative, du système servant, en réception, à l'authentification et au décryptage par chiffrage spatio-temporel en lecture, mettant en œuvre un récepteur GNSS et des moyens de calcul associés pour réaliser le traitement de déchiffrage.

Le système mis en œuvre en réception comprend un récepteur GNSS, en charge de la génération des codes PRN locaux sur commande extérieure, et un module de traitement spécifique qui peut être entièrement logiciel (SW) et implanté dans le système de communication en parallèle du récepteur GNSS, ou bien un module matériel (HW) spécifique (dit add-on en langue anglaise) permettant en particulier d'accélérer les opérations d'acquisition snapshot depuis l'empreinte GNSS par traitement câblé HW en complément des opérations de contrôle des taches réalisées par SW.

A noter qu'un seul et même module HW, défini configurable, permet de réaliser les opérations de chiffrement et de déchiffrement avec la même définition d'interface avec le récepteur GNSS

Le système décrit met en œuvre :

- (201) un récepteur GNSS
- (202) le module de génération de codes PRN local du récepteur, activable à la demande sur requêtes extérieures
- (204) un add-on SW et/ou HW réalisant l'authentification et le décryptage des données chiffrées (203) à transmettre ou à enregistrer selon les principes de l'invention, et délivrant aux destinataires l'information déchiffrée et authentifiée (206)
- (206) un sous-module réalisant le déchiffrage à l'aide des codes PRN déphasés synchronisés

## Applications industrielles possibles de l'invention

De nombreux services et domaines d'application industriels réclamant la protection de l'intégrité de leur données et l'authentification de leur source avec des procédures simplifiées de cybersécurité peuvent bénéficier et tirer parti des avantages de l'invention, en particulier, mais pas limité, à ;

- des systèmes servant à la délivrance de référencement de documents ou d'actes certifiés pour horodatage, ou réalisant un audit d'authentification de transactions,
- des dispositifs délivrant des informations de tachygraphie, permettant de vérifier l'état et l'historique de déplacement de véhicules,
- des dispositifs d'identification et de protection de transferts d'observations transmis par des robots et drones,
- la protection de communications et d'archives personnelles.

Les autorités accréditées pour l'utilisation des services de navigation GNSS réglementés peuvent aussi offrir un service d'audit des transactions en vérifiant leur authenticité de façon sécurisée, voire évaluer d'éventuelles attaques cyber.

## Liste des documents cités

[D1] US 2015/365824 A1 - Gustafson Bo [US]; "Satellite based key agreement for authentication", date de publication 17 décembre 2015 (2015-12-17)
[D2] EP 2 674 779 - Marc Revol; « Système de radionavigation par satellite à architecture déportée », date de dépôt: 13.06.2013[D3] US 2014/368380 A1 - Revol Marc & Al; "Satellite radio navigation system with remote architecture", date de publication 18 décembre 2014 (2014-12-18)
[D4]EP 2 790 035 - Marc Revol; « Procédé et dispositif de compression d'un signal de radionavigation large bande, procédé et dispositif associés de calcul de la fonction de corrélation du code d'étalement dudit signal compressé » , date de dépôt: 07.03.2014

[D5] - Alexander Rugamer, Manuel Stahl, Ivana Lukcin, Gunter Rohmer - Fraunhofer IIS Nuremberg, Germany, «Privacy Protected Localization and Authentication of Georeferenced Measurements using Galileo PRS", publié dans les Proceedings of IEEE/ION PLANS 2014 May 5 - 8, 2014

[D6] - Marc Revol - Thales Avionics, « Distant positioning for GNSS securing", publié dans les Proceeding de ENC 2015- session 08- April 8-10, 2015

[D7] - Marc Revol - Thales Avionics, "Compressing a wide band radio-navigation signal and method for calculating the correlation function for distant positioning" Navitech 2016 - Proceeding ISBN: 978-1-5090-3885-5/ P02- 14-16 December 2016 - ESA/ESTEC, The Netherlands

## Revendications

1. Procédé d'authentification et de cryptage, dit de chiffrement spatio-temporel, sans autorité tierce dédiée pour générer les clés d'accès, appliqué pour la protection d'informations d'intérêt en vue de garantir l'origine et l'intégrité des données, dans un but d'enregistrement ou de transmission, exploitant le positionnement et la datation précise accessible via les signaux GNSS, le dit procédé de chiffrement spatio-temporel consistant à :

   - Estampiller le conteneur de l'information d'intérêt avec la référence de la source et la position et la date de sa création,
   - Protéger l'accès à l'information d'intérêt par chiffrement lié à la position et à la date de création,
   - Bruiter la position et la date de création transmise de façon à rendre ces informations inutilisables par des tiers,
   le procédé de chiffrement spatio-temporel étant **caractérisé en ce que** les facteurs d'authentification et les clés de cryptage dudit procédé dépendent de privilèges spécifiques aux utilisateurs, définis de manière unique à partir des privilèges d'accès aux services de navigation GNSS et des phases de code des signaux GNSS reçus à l'instant et au lieu de création du fichier protégé, dit le conteneur, ledit conteneur étant constitué des informations suivantes:

      - Un identifiant, caractéristique du conteneur, référençant de manière unique la source, la position bruitée et la date arrondie à la création du conteneur ajouté à l'information d'intérêt,

   - L'information d'intérêt cryptée, résultant du chiffrement de l'information d'intérêt initiale en fonction des phases de code des signaux GNSS capturées à l'instant et au lieu de création du conteneur,
   - Une courte séquence temporelle du signal GNSS reçu à l'instant et au lieu de création, dite l'empreinte GNSS de la source, servant à l'authentification multi-facteurs de l'identifiant et au décryptage de l'information d'intérêt chiffrée,

   Ledit procédé de chiffrement spatio-temporel comportant les étapes suivantes à la création du conteneur :

      - Identification de la source d'information (106),
      - Génération des clés de cryptage spatio-temporelle à partir du géoréférencement GNSS (108),
      - Cryptage de l'information d'intérêt à partir des clés spatio-temporelles générées (110),
      - Capture de l'empreinte GNSS servant au transport et à la protection des clés spatio-temporelles à transmettre (112),

   Ledit procédé de chiffrement spatio-temporel comportant les étapes suivantes à la lecture du conteneur :

      - Extraction des clés spatio-temporelles à partir de l'empreinte GNSS (114),
      - Authentification multi-facteurs de la position et du temps GNSS à partir des clés spatio-temporelles extraites de l'empreinte GNSS (116),
      - Décryptage de l'information d'intérêt à partir des clés spatio-temporelles extraites (118),
      - Évaluation du risque cyber en cas d'échec de la lecture du conteneur (120).

2. procédé, selon la revendication 1, de cryptage de l'information d'intérêt par combinaison des données initiales codées en binaire [1, 0] , par au moins un des codes pseudo-aléatoires des signaux GNSS, dits codes PRN pour Pseudo-Random Noise en langue anglaise, poursuivis en réception à l'instant $t_0$ de création du message chiffré, pour la constellation et le service de navigation choisis, la dite combinaison consistant à multiplier bit à bit la séquence de données d'intérêt initiales par la séquence de chips du code PRN, de nature périodique ou apériodique, dépendante du service de navigation mis en œuvre dans le procédé,

Ladite multiplication étant **caractérisée en ce que** :

- Elle est appliquée sur les données d'intérêt d'entrée codées binaire après leur conversion en codage #BPSK [+1,-1], pour Binary Phase Keying en langue anglaise, les chips des codes PRN locaux étant déjà codés #BPSK,
- Les codes PRN locaux appliqués, spécifiques du service de navigation utilisé, sont chacun retardés avant multiplication d'un nombre entier de chips au plus proche de la phase de code instantanée du signal satellite reçu correspondant (115), prélevée à l'instant $t_0$, décalée d'une valeur aléatoire cachée, dite offset de phase aléatoire (114),
- Les différents codes PRN locaux sont appliqués, selon un séquencement cyclique ou aléatoire, dit entrelacs, par tranches temporelles de même longueur sur toute la séquence des données d'intérêt,

Ledit procédé de cryptage comportant les étapes suivantes pour la constitution de la séquence de données cryptées :

- Sélection de la constellation et du service de navigation selon les privilèges utilisateurs,
- Identification des satellites GNSS poursuivis à l'instant $t_0$ (112),
- Capture des phases de code périodique ou apériodique, selon le service de navigation choisi et des satellites poursuivis à l'instant $t_0$ (113), congrues modulo une durée suffisante pour protéger d'une acquisition directe des pseudo-distances associées, par exemple 100ms,
- Ajout de l'offset de phase aléatoire (114) calculé conjointement au bruit de position, initialisé sur un arrondi de la date de création et d'écart-type secret dont l'ajustement est connu des seuls utilisateurs autorisés. L'offset de phase de code est déterminé comme une proportion des écarts existants entre les phases de codes instantanées poursuivies par le récepteur et les phases de code médianes bruitées obtenues par transformation inverse PVT$^{-1}$ (171) de la position bruitée transmise, le coefficient de proportionnalité résultant du même tirage aléatoire équiréparti sur ]0,1[ que celui réalisé par le générateur de bruit pour le bruitage de la position,
- Lecture des données binaires à chiffrer au rythme d'enregistrement ou de transmission des données choisi (123),
- Conversion des données binaires en données codées #BPSK (125),
- Séquencement des codes locaux satellites à appliquer par tranches temporelles successives pour réaliser le chiffrage par les codes satellites selon ledit entrelacs défini pour contribuer au chiffrage des données (127),
- Pour chaque tranche temporelle, alignement de l'origine de la génération des séquences de codes en fonction des phases de codes capturées à l'instant $t_0$ et de l'offset de phase aléatoire (128),
- Multiplication bit à bit au rythme d'enregistrement ou de transmission choisi entre les données codées #BPSK et les chips de codes codées #BPSK (126),
- Conversion des sorties de multiplication en données codées binaires (129).

3. Procédé, selon la revendication 1, dit d'authentification de l'origine dudit conteneur, mettant en œuvre la position et la date GNSS transmises bruitées ainsi que l'empreinte GNSS représentative des caractéristiques du signal GNSS reçu à l'instant de création et ajoutée dans le conteneur, ladite empreinte GNSS consistant en une tranche (143) du signal GNSS numérisé en sortie de l'étage RF de réception GNSS (142), filtré dans une bande de réception du signal GNSS (141) compatible à minima de l'étalement en fréquence contenant le code du service de navigation mis en œuvre,
Ledit procédé d'authentification étant **caractérisé en ce que** :

- Les phases de codes des signaux GNSS visibles sont extraites de l'empreinte, constituée d'une courte tranche du signal GNSS de quelques millisecondes, capturée à l'instant de création du message chiffré (151),
- Les phases de codes extraites de l'empreinte sont utilisées pour estimer les écarts entre la position et la date de capture de l'empreinte, estimés à partir de l'empreinte, et la position bruitée et la date arrondie de création du message fournis dans l'identifiant du conteneur, les éphémérides des satellites étant des données connues fournies par ailleurs par le système GNSS (156),
- Les écarts de position et de temps calculés à partir des phases de codes extraites de l'empreinte (154) et des phases de codes correspondant à la position bruitée et à la date arrondie transmis dans le conteneur (152), après correction du bruit volontairement ajouté à l'émission, de loi de tirage connue du destinataire, sont évalués en regard de la distribution des erreurs GNSS dépendant de la précision standard du service de navigation GNSS mis en œuvre, de la quantification de l'arrondi de la date de création et de la durée de l'empreinte (157).

4. Procédé, selon les revendications 1 et 3, d'extraction des phases de codes servant à l'authentification, à partir de l'empreinte GNSS capturée à la date de création du message chiffré, consistant en une acquisition directe (52), dite snapshot en langue anglaise, des codes des satellites visibles sur la seule longueur de l'empreinte, aidée par les phases de codes correspondant à la position non bruitée et au temps GNSS arrondi(51), obtenue après suppression du bruit (53) ajouté à la position transmise dans le conteneur, la loi de tirage de bruit étant connue à la fois par l'émetteur et le destinataire, ladite acquisition snapshot étant **caractérisée en ce que** :

- La position des satellites correspondant à la date de création du message, fournie en temps GNSS arrondi, transmise dans le conteneur, est calculée à partir des éphémérides connus des satellites GNSS pour le service de navigation mise en œuvre en réception,
- L'acquisition des phases de codes de l'empreinte GNSS est réalisée sur une plage d'exploration du temps GNSS encadrant les phases de codes attendues des satellites visibles, la date de début de l'empreinte étant initialisée sur le temps de création réel du message,
- Les phases de code attendues servant à l'initialisation sont calculées à partir de la position non bruitée, obtenue après correction de la position bruitée issue du conteneur, et des positions des satellites calculées pour le temps GNSS arrondi de création du message issue du conteneur (51) :

o Le modèle de génération des aléas de bruit de position utilisés à l'écriture étant connu par le destinataire, la position bruitée fournie par le conteneur est corrigée des valeurs des aléas de position générés à partir du même germe de génération qu'en écriture, initialisé sur le temps GNSS arrondi de création du message (53)

- L'acquisition de la phase de chacun des codes de l'empreinte est réalisée par balayage du retard appliqué sur le code local (163) dans la plage d'exploration (168) fonction de l'écart-type résiduel standard de bruit de phase et de l'imprécision de positionnement des satellites, pour rechercher la date de meilleure corrélation (167) entre le code du signal de l'empreinte (162) et le code local synchronisé, dans une plage de retard située autour du retard correspondant à la phase de code attendue (160).

5. Procédé, selon les revendications 1 et 2, de décryptage des données d'intérêt chiffrées par les codes locaux alignés sur la phase de code non bruitées des signaux reçus à l'instant de création du message, décalée d'un offset de phase aléatoire, obtenu par génération du bruit de position à la création du message chiffré, **caractérisé en ce que** :

- La constellation et le service de navigation à utiliser pour réaliser le décryptage des données d'intérêt, sont identiques à ceux utilisés pour réaliser le cryptage,
- L'extraction des phases de codes non bruitées est réalisée à partir de l'empreinte GNSS captée à l'instant $t_0$ de création du message chiffré, par acquisition snapshot des codes (174), aidée par les phases de codes médianes dérivées après correction des aléas de la position GNSS bruitée transmise dans le conteneur,
- Les offsets de phase sont calculées (173) pour la date GNSS arrondie de création du message, comme une proportion des écarts entre les phases de code de la position estimée non bruitée extraites à partir de l'empreinte et les phases de code médianes obtenues par transformation inverse PVT$^{-1}$ (171) de la position bruitée reçue, le facteur de proportion étant obtenu simultanément au calcul des aléas de bruit de position (1711) reconstitués par mise en œuvre, à l'identique de l'émission, de l'algorithme de génération de bruit aléatoire paramétré de son écart-type, gardé secret et connus du destinataire, ainsi que des éphémérides des satellites de la constellation de satellites GNSS,
- Les offsets de phase de code sont ajoutés (175) aux phases de code extraites de l'empreinte, pour ajuster les retards des codes locaux d'un nombre entier de chips (176) au plus proche des phases de code appliquées pour crypter le message, à l'instant $t_0$ de création du conteneur,
- Les données d'intérêt cryptées (179) sont déchiffrées par multiplication bit à bit entre les données d'intérêt cryptées et les codes PRN locaux retardés (177), choisis selon le séquencement (1710), cyclique ou aléatoire de codes locaux, défini par l'entrelacs de cryptage,

Ledit procédé de décryptage comportant les étapes suivantes pour la constitution de la séquence de données décryptées :

- Sélection de la constellation et du service de navigation utilisés pour le cryptage,
- Identification des satellites GNSS poursuivis à l'instant $t_0$,
- Correction du biais de la position bruitée transmise, par mise en œuvre du générateur de bruit avec les mêmes caractéristiques d'initialisation sur le temps arrondi GNSS que lors de la création du conteneur

- Calcul des phases de codes médianes à partir de la position corrigée pour initialisation de la recherche locale des phases de code instantanées depuis l'empreinte du signal,

- Extraction à partir de l'empreinte des phases de codes périodiques ou apériodiques, selon le service de navigation choisi, des satellites poursuivis à l'instant $t_0$,

- Calcul des offsets de phase comme une proportion des écarts entre les phases de code de la position estimée non bruitée et les phases de code médianes obtenues par transformation inverse $PVT^{-1}$ de la position bruitée transmise dans l'identifiant du conteneur pour la date arrondie de création du message,

- Lecture des données binaires à déchiffrer au rythme choisi d'enregistrement ou de transmission des données,

- Conversion des données binaires en données codées #BPSK,

- Séquencement selon l'entrelacs des codes locaux satellites à appliquer par tranches temporelles successives pour réaliser le déchiffrage par les codes satellites cryptés suivant ledit entrelacs,

- Pour chaque tranche temporelle, alignement de l'origine de la génération des séquences de codes en fonction des phases de codes périodiques ou apériodiques extraites de l'empreinte et de l'offset de phase aléatoire reconstitué,

- Multiplication bit à bit, au rythme d'enregistrement ou de transmission choisi, entre les données codées #BPSK et les chips de codes codées #BPSK,

- Conversion des sorties de multiplication en données codées binaires.

6. Procédé, selon les revendications 1, 3 et 4, d'ajustement du niveau de sécurité de l'authentification et du chiffrement par sélection de la constellation et du service de navigation GNSS, robuste au leurrage des signaux, ledit procédé d'ajustement de la sécurité consistant à mettre en œuvre pour les utilisateurs ou autorités accrédités, un service de navigation GNSS crypté a priori non accessible à la menace pressentie, le procédé étant **caractérisé en ce que** :

- L'empreinte GNSS, lorsqu'elle est prélevée dans une large bande, capte les signaux de toutes les constellations et de tous les services de navigation associés,

- La constellation utilisée pour réaliser le chiffrement-déchiffrement et l'authentification (158) est choisie selon la disponibilité géographique de la constellation et l'agrément fourni par l'autorité garante de l'utilisation des services de navigation GNSS,

- Le contrôle de sécurité (157), qui nécessite les clés d'accès aux signaux GNSS cryptés, peut être réalisé directement par l'utilisateur s'il est accrédité ou bien par une autorité mandatée pour réaliser la confirmation.

7. Procédé, selon les revendications 1 à 6, de validation du déchiffrement des données d'intérêt après déchiffrement, et d'évaluation du risque d'attaque cyber en cas d'échec (611), **caractérisé en ce que** :

- Un échec de l'authentification de l'empreinte (181) implique une falsification, par intrusion du conteneur, de la position ou du temps de création transmis dans le conteneur, non cohérente de l'empreinte,

- En cas de réussite de l'authentification, un échec du décryptage des données d'intérêt (182) implique une falsification, par intrusion du conteneur, de la position et du temps de création cohérente de l'empreinte, non cohérente de l'entrelacs et des phases de code de cryptage des données,

- En cas de succès du décryptage des données d'intérêt, un test dit de Geofencing (183), consistant à vérifier, lorsque les informations sont disponibles par ailleurs, que la position et le temps de création attendus correspondent aux informations d'identification disponibles dans le conteneur. Un échec de la vérification par Geofencing est révélateur d'un leurrage des signaux GNSS à la réception sur l'antenne, par exemple par superposition de signaux créés par simulation de signaux de constellation, accessibles pour les services de navigation ouverts,

- Enfin, une vérification ultime (184), consiste à contrôler l'authentification de l'empreinte en s'appuyant sur les signaux GNSS cryptés règlementés, via une autorité accréditée pour disposer des clés de cryptage des signaux GNSS. Un échec de l'authentification par les signaux GNSS cryptés est révélateur d'une attaque ciblée sur la zone de mise en œuvre des enregistrements ou des communications sécurisés.

8. Dispositif de chiffrement et déchiffrement garantissant l'origine et l'intégrité d'une information d'intérêt dans un but d'enregistrement ou de transmission, implantant les procédés des revendications 1 à 7, **caractérisé en ce qu'**il comprend :

- Une antenne de réception GNSS (191),
- Un récepteur GNSS mono ou multi-constellations capable de traiter un ou plusieurs services de navigation en parallèle et de prélever une tranche de signal RF, dite snapshot, à la réception d'une commande externe, et de fournir les phases de codes des satellites visibles à cet instant (192),

- Pour la création du conteneur protégé, un module de traitement (193) et un logiciel interfacé avec le récepteur GNSS (195), configuré en chiffrement, capable de réaliser les traitements d'identification du conteneur et de cryptage de l'information d'intérêt à enregistrer ou à transmettre,

- Pour la lecture du conteneur, un module de traitement (204) et un logiciel, configuré en déchiffrement (205), capable de réaliser les traitements d'authentification du conteneur et de décryptage de l'information d'intérêt enregistrée ou transmise.

9. Dispositif de chiffrement et déchiffrement dans un but d'enregistrement ou de transmission selon la revendication 8 précédente, pour lequel la constellation GNSS utilisée est la constellation Galileo, et les services de navigation mis en œuvre utilisent les signaux du service ouverts, dit OS, et les signaux cryptés du service commercial, dit CS, ou du service régulé, dit PRS,

10. Procédé d'authentification de l'information d'intérêt selon les revendications 3 et 4, permettant de valider l'origine et le contenu des données d'intérêt avec au moins un niveau de sécurité supplémentaire par rapport à celui fourni par un dispositif basé sur des signaux ouverts périodiques, **caractérisé en ce que** l'authentification fournie par le service s'appuie respectivement :

- Sur les voies pilotes des signaux ouverts GNSS de période 100ms,
- Sur les signaux cryptés CS ou PRS de la constellation Galileo, si le service nominal met en œuvre uniquement des signaux GNSS ouverts,
- Sur les signaux cryptés PRS de la constellation Galileo, si le service nominal met en œuvre uniquement des signaux GNSS commerciaux, de type CS Galileo,
- Sur les signaux de constellations différentes de la constellation mise en œuvre par le service nominal, s'il met en œuvre uniquement une constellation.

**Patentansprüche**

1. Verfahren zur Authentifizierung und Verschlüsselung, bezeichnet als raumzeitliche Verschlüsselung, ohne dedizierte dritte Instanz zur Generierung von Zugriffsschlüsseln, angewendet zum Schutz von Informationen von Interesse, um Ursprung und Integrität der Daten für Aufzeichnungs- oder Übertragungszwecke zu gewährleisten, das die präzise Positionsbestimmung und Zeitstempelung über GNSS-Signale nutzt, wobei das genannte raumzeitliche Verschlüsselungsverfahren Folgendes umfasst:

- Zeitstempelung des Containers der Information von Interesse mit der Quellenreferenz sowie der Position und dem Datum seiner Erstellung,
- Schutz des Zugriffs auf die Information von Interesse durch Verschlüsselung, die an die Position und das Erstellungsdatum gebunden ist,
- Hinzufügen von Rauschen zur übertragenen Position und dem Erstellungsdatum, um diese Informationen für Dritte unbrauchbar zu machen,

wobei das raumzeitliche Verschlüsselungsverfahren **dadurch gekennzeichnet ist, dass** die Authentifizierungsfaktoren und Verschlüsselungsschlüssel des genannten Verfahrens von spezifischen Benutzerprivilegien abhängen, die eindeutig basierend auf den Privilegien für den Zugriff auf GNSS-Navigationsdienste und den Codephasen der zum Zeitpunkt und am Ort der Erstellung des geschützten Containers empfangenen GNSS-Signale definiert werden, wobei der genannte Container aus folgenden Informationen besteht:

- Eine Kennung, die den Container kennzeichnet und die Quelle, die verrauschte Position und das gerundete Datum der Containererstellung eindeutig referenziert, hinzugefügt zur Information von Interesse,
- Die verschlüsselte Information von Interesse, die aus der Verschlüsselung der ursprünglichen Information von Interesse in Abhängigkeit von den Codephasen der zum Zeitpunkt und am Ort der Erstellung des Containers erfassten GNSS-Signale resultiert,
- Eine kurze zeitliche Sequenz des zum Zeitpunkt und am Ort der Erstellung empfangenen GNSS-Signals, bezeichnet als GNSS-Fingerabdruck der Quelle, der zur Mehrfaktor-Authentifizierung der Kennung und zur Entschlüsselung der verschlüsselten Information von Interesse dient,

wobei das raumzeitliche Verschlüsselungsverfahren bei der Erstellung des Containers folgende Schritte umfasst:

- Identifizierung der Informationsquelle (106),
- Generierung raumzeitlicher Verschlüsselungsschlüssel aus der GNSS-Georeferenzierung (108),

- Verschlüsselung der Information von Interesse aus den generierten raumzeitlichen Schlüsseln (110),
- Erfassung des GNSS-Fingerabdrucks, der zum Transport und Schutz der zu übertragenden raumzeitlichen Schlüssel dient (112),

wobei das raumzeitliche Verschlüsselungsverfahren beim Lesen des Containers folgende Schritte umfasst:

- Extraktion der raumzeitlichen Schlüssel aus dem GNSS-Fingerabdruck (114),
- Mehrfaktor-Authentifizierung der GNSS-Position und -Zeit aus den aus dem GNSS-Fingerabdruck extrahierten raumzeitlichen Schlüsseln (116),
- Entschlüsselung der Information von Interesse aus den extrahierten raumzeitlichen Schlüsseln (118),
- Bewertung des Cyberrisikos bei einem Fehlschlagen des Lesens des Containers (120).

2. Verfahren nach Anspruch 1 zur Verschlüsselung der Information von Interesse durch Kombination der in Binärcode [1,0] codierten Ausgangsdaten mit mindestens einem der Pseudozufallscodes der GNSS-Signale, bezeichnet als PRN-Codes (Pseudo-Random Noise), die zum Zeitpunkt $t_0$ der Erstellung der verschlüsselten Nachricht empfangen werden, für die gewählte Konstellation und den Navigationsdienst, wobei die genannte Kombination darin besteht, die Sequenz der ursprünglichen Daten von Interesse bitweise mit der Sequenz der Chips des PRN-Codes zu multiplizieren, der je nach verwendetem Navigationsdienst periodisch oder aperiodisch ist, wobei die genannte Multiplikation **dadurch gekennzeichnet ist, dass:**

- Sie auf die binär codierten Eingangs-Daten von Interesse angewendet wird, nachdem diese in #BPSK-Codierung [+1,-1] (Binary Phase Keying) umgewandelt wurden, wobei die Chips der lokalen PRN-Codes bereits #BPSK-codiert sind,
- Die angewendeten lokalen PRN-Codes, die für den verwendeten Navigationsdienst spezifisch sind, vor der Multiplikation jeweils um eine ganze Anzahl von Chips verzögert werden, die der momentanen Codephase des entsprechenden empfangenen Satellitensignals (115) am nächsten ist, das zum Zeitpunkt $t_0$ abgetastet wird, verschoben um einen versteckten Zufallswert, bezeichnet als zufälliger Phasenoffset (114),
- Die verschiedenen lokalen PRN-Codes gemäß einer zyklischen oder zufälligen Abfolge, bezeichnet als Verschachtelung, in zeitlichen Abschnitten gleicher Länge über die gesamte Sequenz der Daten von Interesse angewendet werden,

wobei das Verschlüsselungsverfahren zur Bildung der verschlüsselten Datensequenz folgende Schritte umfasst:

- Auswahl der Konstellation und des Navigationsdienstes gemäß den Benutzerprivilegien,
- Identifizierung der zum Zeitpunkt $t_0$ verfolgten GNSS-Satelliten (112),
- Erfassung der periodischen oder aperiodischen Codephasen gemäß dem gewählten Navigationsdienst und den zum Zeitpunkt $t_0$ verfolgten Satelliten (113), kongruent modulo einer ausreichenden Dauer, um vor direkter Erfassung der zugehörigen Pseudodistanzen zu schützen, z. B. 100 ms,
- Hinzufügen des zufälligen Phasenoffsets (114), der gemeinsam mit dem Positionsrauschen berechnet wird, initialisiert auf eine Rundung des Erstellungsdatums und mit einer geheimen Standardabweichung, die nur autorisierten Benutzern bekannt ist. Der Codephasenoffset wird als Anteil der bestehenden Unterschiede zwischen den momentanen, vom Empfänger verfolgten Codephasen und den verrauschten mittleren Codephasen bestimmt, die durch inverse $PVT^{-1}$-Transformation (171) der übertragenen verrauschten Position erhalten werden, wobei der Proportionalitätskoeffizient aus derselben gleichverteilten Zufallsziehung auf $]0,1[$ resultiert wie die vom Rauschgenerator für die Positionsverrauschung durchgeführte,
- Lesen der zu verschlüsselnden Binärdaten mit der gewählten Datenaufzeichnungs- oder -übertragungsrate (123),
- Umwandlung der Binärdaten in #BPSK-codierte Daten (125),
- Abfolge der anzuwendenden lokalen Satellitencodes in aufeinanderfolgenden zeitlichen Abschnitten, um die Verschlüsselung durch die Satellitencodes gemäß der genannten, zur Verschlüsselung der Daten beitragenden Verschachtelung durchzuführen (127),
- Für jeden zeitlichen Abschnitt: Ausrichtung des Ursprungs der Generierung der Codesequenzen in Abhängigkeit von den zum Zeitpunkt to erfassten Codephasen und dem zufälligen Phasenoffset (128),
- Bitweise Multiplikation mit der gewählten Aufzeichnungs- oder Übertragungsrate zwischen den #BPSK-codierten Daten und den #BPSK-codierten Code-Chips (126),

- Umwandlung der Multiplikationsausgänge in binär codierte Daten (129).

3. Verfahren nach Anspruch 1, bezeichnet als Authentifizierung des Ursprungs des genannten Containers, das die verrauschte, übertragene GNSS-Position und -Zeit sowie den GNSS-Fingerabdruck nutzt, der die Merkmale des zum Zeitpunkt der Erstellung empfangenen GNSS-Signals repräsentiert und dem Container hinzugefügt wird, wobei der genannte GNSS-Fingerabdruck aus einem Ausschnitt (143) des digitalisierten GNSS-Signals am Ausgang der GNSS-RF-Empfangsstufe (142) besteht, gefiltert in einem GNSS-Signal-Empfangsband (141), das mindestens mit der Frequenzspreizung kompatibel ist, die den Code des implementierten Navigationsdienstes enthält,
wobei das Authentifizierungsverfahren **dadurch gekennzeichnet ist, dass:**

- Die Codephasen der sichtbaren GNSS-Signale aus dem Fingerabdruck extrahiert werden, der aus einem kurzen Ausschnitt des GNSS-Signals von einigen Millisekunden besteht, der zum Zeitpunkt der Erstellung der verschlüsselten Nachricht erfasst wird (151),
- Die aus dem Fingerabdruck extrahierten Codephasen verwendet werden, um die Abweichungen zwischen der Position und dem Zeitpunkt der Fingerabdruckerfassung, die aus dem Fingerabdruck geschätzt werden, und der verrauschten Position sowie dem gerundeten Erstellungsdatum der Nachricht, die in der Containererkennung bereitgestellt werden, zu schätzen, wobei die Ephemeriden der Satelliten bekannte Daten sind, die anderweitig vom GNSS-System bereitgestellt werden (156),
- Die aus den aus dem Fingerabdruck extrahierten Codephasen (154) und den Codephasen, die der verrauschten Position und dem gerundeten Datum entsprechen, das im Container übertragen wird (152), berechneten Positions- und Zeitabweichungen nach Korrektur des absichtlich hinzugefügten Rauschens, dessen Ziehungsgesetz dem Empfänger bekannt ist, in Bezug auf die Verteilung der GNSS-Fehler bewertet werden, abhängig von der Standardpräzision des implementierten GNSS-Navigationsdienstes, der Quantisierung der Rundung des Erstellungsdatums und der Dauer des Fingerabdrucks (157).

4. Verfahren nach den Ansprüchen 1 und 3 zur Extraktion der Codephasen, die zur Authentifizierung dienen, aus dem zum Zeitpunkt der Erstellung der verschlüsselten Nachricht erfassten GNSS-Fingerabdruck, bestehend aus einer direkten Erfassung (52), bezeichnet als Snapshot, der Codes der sichtbaren Satelliten über die gesamte Länge des Fingerabdrucks, unterstützt durch die Codephasen, die der unverrauschten Position und der gerundeten GNSS-Zeit (51) entsprechen, die nach der Unterdrückung des Rauschens (53) erhalten wird, das der im Container übertragenen Position hinzugefügt wurde, wobei das Rauschziehungsgesetz sowohl dem Sender als auch dem Empfänger bekannt ist, wobei die genannte Snapshot-Erfassung **dadurch gekennzeichnet ist, dass:**

- Die Position der Satelliten, die dem Erstellungsdatum der Nachricht entspricht, in gerundeter GNSS-Zeit, die im Container übertragen wird, aus den bekannten Ephemeriden der GNSS-Satelliten für den im Empfang implementierten Navigationsdienst berechnet wird,
- Die Erfassung der Codephasen des GNSS-Fingerabdrucks über einen GNSS-Zeit-Erkundungsbereich erfolgt, der die erwarteten Codephasen der sichtbaren Satelliten einrahmt, wobei das Startdatum des Fingerabdrucks auf die tatsächliche Erstellungszeit der Nachricht initialisiert wird,
- Die zur Initialisierung dienenden erwarteten Codephasen aus der unverrauschten Position berechnet werden, die nach der Korrektur der verrauschten Position aus dem Container erhalten wird, und den Positionen der Satelliten, die für die gerundete GNSS-Zeit der Erstellung der Nachricht aus dem Container (51) berechnet werden:

o Da das Modell zur Erzeugung der Positionsrausch-Zufälligkeit, das beim Schreiben verwendet wird, dem Empfänger bekannt ist, wird die im Container bereitgestellte verrauschte Position um die Werte der Positionsrausch-Zufälligkeit korrigiert, die aus demselben Erzeugungskeim wie beim Schreiben generiert werden, initialisiert auf die gerundete GNSS-Zeit der Erstellung der Nachricht (53),

- Die Erfassung der Phase jedes der Codes des GNSS-Fingerabdrucks durch Abtasten der auf den lokalen Code (163) angewendeten Verzögerung im Erkundungsbereich (168) in Abhängigkeit von der verbleibenden Standardabweichung des Phasenrauschens und der Ungenauigkeit der Satellitenpositionierung erfolgt, um das Datum der besten Korrelation (167) zwischen dem Code des Fingerabdrucksignals (162) und dem synchronisierten lokalen Code in einem Verzögerungsbereich zu suchen, der sich um die Verzögerung befindet, die der erwarteten Codephase (160) entspricht.

**5.** Verfahren nach den Ansprüchen 1 und 2 zur Entschlüsselung der verschlüsselten Daten von Interesse durch die lokalen Codes, die auf die unverrauschte Codephase der zum Zeitpunkt der Erstellung der Nachricht empfangenen Signale ausgerichtet sind, verschoben um einen zufälligen Phasenoffset, der durch die Erzeugung des Positionsrauschens bei der Erstellung der verschlüsselten Nachricht erhalten wird,

**dadurch gekennzeichnet, dass:**

- Die zur Entschlüsselung der Daten von Interesse zu verwendende Konstellation und der Navigationsdienst mit denen identisch sind, die zur Verschlüsselung verwendet wurden,
- Die Extraktion der unverrauschten Codephasen aus dem zum Zeitpunkt $t_0$ der Erstellung der verschlüsselten Nachricht erfassten GNSS-Fingerabdruck durch Snapshot-Erfassung der Codes (174) erfolgt, unterstützt durch die mittleren Codephasen, die nach der Korrektur der Zufälligkeit der im Container übertragenen verrauschten GNSS-Position abgeleitet werden,
- Die Phasenoffsets für das gerundete GNSS-Datum der Erstellung der Nachricht als Anteil der Unterschiede zwischen den Codephasen der unverrauschten geschätzten Position, die aus dem Fingerabdruck extrahiert werden, und den mittleren Codephasen berechnet werden (173), die durch inverse PVT$^{-1}$-Transformation (171) der empfangenen verrauschten GNSS-Position erhalten werden, wobei der Proportionalitätsfaktor gleichzeitig mit der Berechnung der Positionsrausch-Zufälligkeit (1711) erhalten wird, die durch identische Implementierung des Algorithmus zur Erzeugung von Zufallsrauschen mit seiner geheimen und dem Empfänger bekannten Standardabweichung sowie den Ephemeriden der Satelliten der GNSS-Satellitenkonstellation rekonstruiert wird,
- Die Phasenoffsets zu den aus dem Fingerabdruck extrahierten Codephasen hinzugefügt werden (175), um die Verzögerungen der lokalen Codes um eine ganze Anzahl von Chips (176) anzupassen, die den zur Verschlüsselung der Nachricht zum Zeitpunkt to der Erstellung des Containers angewendeten Codephasen am nächsten kommen,

wobei das Entschlüsselungsverfahren zur Bildung der entschlüsselten Datensequenz folgende Schritte umfasst:

- Auswahl der Konstellation und des Navigationsdienstes, die für die Verschlüsselung verwendet wurden,
- Identifizierung der zum Zeitpunkt to verfolgten GNSS-Satelliten,
- Korrektur der Verzerrung der übertragenen verrauschten Position durch Implementierung des Rauschgenerators mit denselben Initialisierungseigenschaften auf der gerundeten GNSS-Zeit wie bei der Erstellung des Containers,
- Berechnung der mittleren Codephasen aus der korrigierten Position zur Initialisierung der lokalen Suche nach den momentanen Codephasen aus dem Signal-Fingerabdruck,
- Extraktion der periodischen oder aperiodischen Codephasen gemäß dem gewählten Navigationsdienst der zum Zeitpunkt to verfolgten Satelliten aus dem Fingerabdruck,
- Berechnung der Phasenoffsets als Anteil der Unterschiede zwischen den Codephasen der unverrauschten geschätzten Position und den mittleren Codephasen, die durch inverse PVT$^{-1}$-Transformation der im Container übertragenen verrauschten Position für das gerundete Erstellungsdatum der Nachricht erhalten werden,
- Lesen der zu entschlüsselnden Binärdaten mit der gewählten Datenaufzeichnungs- oder -übertragungsrate,
- Umwandlung der Binärdaten in #BPSK-codierte Daten,
- Abfolge der anzuwendenden lokalen Satellitencodes in aufeinanderfolgenden zeitlichen Abschnitten gemäß der Verschachtelung, um die Entschlüsselung durch die verschlüsselten Satellitencodes gemäß der genannten Verschachtelung durchzuführen,
- Für jeden zeitlichen Abschnitt: Ausrichtung des Ursprungs der Generierung der Codesequenzen in Abhängigkeit von den aus dem Fingerabdruck extrahierten periodischen oder aperiodischen Codephasen und dem rekonstruierten zufälligen Phasenoffset,
- Bitweise Multiplikation mit der gewählten Aufzeichnungs- oder Übertragungsrate zwischen den #BPSK-codierten Daten und den #BPSK-codierten Code-Chips,
- Umwandlung der Multiplikationsausgänge in binär codierte Daten.

**6.** Verfahren nach den Ansprüchen 1, 3 und 4 zur Anpassung des Sicherheitsniveaus der Authentifizierung und Verschlüsselung durch Auswahl der GNSS-Konstellation und des Navigationsdienstes, das gegen Signalspoofing robust ist, wobei das genannte Sicherheitsanpassungsverfahren darin besteht, für akkreditierte Benutzer oder Behörden einen a priori verschlüsselten GNSS-Navigationsdienst zu implementieren, der für die wahrgenommene Bedrohung nicht zugänglich ist, wobei das Verfahren **dadurch gekennzeichnet ist, dass:**

- Der GNSS-Fingerabdruck, wenn er in einem breiten Band erfasst wird, die Signale aller Konstellationen und aller zugehörigen Navigationsdienste erfasst,

- Die für die Verschlüsselung-Entschlüsselung und Authentifizierung (158) verwendete Konstellation gemäß der geografischen Verfügbarkeit der Konstellation und der Genehmigung ausgewählt wird, die von der für die Nutzung der GNSS-Navigationsdienste zuständigen Behörde erteilt wird,

- Die Sicherheitsprüfung (157), die die Zugriffsschlüssel zu den verschlüsselten GNSS-Signalen erfordert, direkt vom Benutzer durchgeführt werden kann, wenn dieser akkreditiert ist, oder von einer beauftragten Behörde zur Durchführung der Bestätigung.

7. Verfahren nach den Ansprüchen 1 bis 6 zur Validierung der Entschlüsselung der Daten von Interesse nach der Entschlüsselung und zur Bewertung des Cyberangriffsrisikos im Fehlerfall (611), **dadurch gekennzeichnet, dass:**

- Ein Fehlschlagen der Authentifizierung des Fingerabdrucks (181) eine Fälschung durch Eindringen in den Container impliziert, wobei die Position oder die Erstellungszeit, die im Container übertragen wird, nicht mit dem Fingerabdruck übereinstimmt,

- Bei erfolgreicher Authentifizierung ein Fehlschlagen der Entschlüsselung der Daten von Interesse (182) eine Fälschung durch Eindringen in den Container impliziert, wobei die Position und die Erstellungszeit zwar mit dem Fingerabdruck übereinstimmen, nicht jedoch mit der Verschachtelung und den Verschlüsselungs-Codephasen der Daten,

- Bei erfolgreicher Entschlüsselung der Daten von Interesse ein als Geofencing bezeichneter Test (183) durchgeführt wird, der überprüft, ob die erwartete Position und Erstellungszeit, sofern die Informationen anderweitig verfügbar sind, mit den im Container verfügbaren Identifikationsinformationen übereinstimmen. Ein Fehlschlagen der Geofencing-Überprüfung deutet auf eine Spoofing-Attacke der GNSS-Signale beim Empfang über die Antenne hin, z. B. durch Überlagerung von Signalen, die durch Simulation von Konstellationssignalen erzeugt werden (zugänglich für offene Navigationsdienste),

- Schließlich besteht eine letzte Überprüfung (184) darin, die Authentifizierung des Fingerabdrucks auf der Grundlage regulierter verschlüsselter GNSS-Signale über eine akkreditierte Behörde, die über die GNSS-Signalverschlüsselungsschlüssel verfügt, zu kontrollieren. Ein Fehlschlagen der Authentifizierung durch die verschlüsselten GNSS-Signale deutet auf einen gezielten Angriff auf den Bereich der Implementierung der gesicherten Aufzeichnungen oder Kommunikationen hin.

8. Vorrichtung zur Verschlüsselung und Entschlüsselung, die Ursprung und Integrität einer Information von Interesse für Aufzeichnungs- oder Übertragungszwecke garantiert und die Verfahren der Ansprüche 1 bis 7 implementiert, **dadurch gekennzeichnet, dass** sie umfasst:

- Eine GNSS-Empfangsantenne (191),

- Einen Ein- oder Mehrkonstellations-GNSS-Empfänger, der in der Lage ist, einen oder mehrere Navigationsdienste parallel zu verarbeiten und auf externen Befehl einen RF-Signalausschnitt, bezeichnet als Snapshot, zu erfassen und die Codephasen der zu diesem Zeitpunkt sichtbaren Satelliten bereitzustellen (192),

- Zur Erstellung des geschützten Containers ein Verarbeitungsmodul (193) und eine Software, die mit dem GNSS-Empfänger (195) verbunden ist und für die Verschlüsselung konfiguriert ist, um die Identifizierungs- und Verschlüsselungsvorgänge der aufzuzeichnenden oder zu übertragenden Information von Interesse durchzuführen,

- Zum Lesen des Containers ein Verarbeitungsmodul (204) und eine Software, die für die Entschlüsselung (205) konfiguriert ist, um die Authentifizierungs- und Entschlüsselungsvorgänge der aufgezeichneten oder übertragenen Information von Interesse durchzuführen.

9. Verschlüsselungs- und Entschlüsselungsvorrichtung für Aufzeichnungs- oder Übertragungszwecke nach dem vorhergehenden Anspruch 8, bei der die verwendete GNSS-Konstellation die Galileo-Konstellation ist und die implementierten Navigationsdienste die Signale des offenen Dienstes, bezeichnet als OS, und die verschlüsselten Signale des kommerziellen Dienstes, bezeichnet als CS, oder des regulierten Dienstes, bezeichnet als PRS, nutzen.

10. Verfahren zur Authentifizierung der Information von Interesse nach den Ansprüchen 3 und 4 im Dienst einer akkreditierten dritten Instanz, das die Validierung von Ursprung und Inhalt der Daten von Interesse mit mindestens einer zusätzlichen Sicherheitsebene im Vergleich zu der von einer auf periodischen offenen Signalen basierenden Vorrichtung ermöglicht, **dadurch gekennzeichnet, dass** die vom Dienst bereitgestellte Authentifizierung jeweils auf Folgendem basiert:

- Den Pilotkanälen der offenen GNSS-Signale mit einer Periode von 100 ms,
- Den verschlüsselten CS- oder PRS-Signalen der Galileo-Konstellation, wenn der Nominaldienst nur offene GNSS-Signale implementiert,
- Den verschlüsselten PRS-Signalen der Galileo-Konstellation, wenn der Nominaldienst nur kommerzielle GNSS-Signale, wie Galileo CS, implementiert,
- Den Signalen von Konstellationen, die sich von der vom Nominaldienst implementierten Konstellation unterscheiden, wenn dieser nur eine Konstellation implementiert.

**Claims**

1. Method for authentication and encryption, referred to as spatio-temporal encryption, without a dedicated third-party authority to generate access keys, applied for the protection of information of interest in order to guarantee the origin and integrity of the data, for the purpose of recording or transmission, exploiting the precise positioning and dating accessible via GNSS signals, said spatio-temporal encryption method consisting in:

    - Timestamping the container of the information of interest with the source reference and the position and date of its creation,
    - Protecting access to the information of interest by encryption linked to the position and date of creation,
    - Adding noise to the transmitted position and creation date so as to render this information unusable by third parties,
    said spatio-temporal encryption method being **characterized in that** the authentication factors and encryption keys of said method depend on specific user privileges, uniquely defined based on the privileges of access to GNSS navigation services and the code phases of the GNSS signals received at the time and place of creation of the protected file, referred to as the container, said container consisting of the following information:

    - An identifier, characteristic of the container, uniquely referencing the source, the noised position, and the rounded date at the creation of the container, added to the information of interest,
    - The encrypted information of interest, resulting from the encryption of the initial information of interest as a function of the code phases of the GNSS signals captured at the time and place of creation of the container,

    - A short temporal sequence of the GNSS signal received at the time and place of creation, referred to as the GNSS fingerprint of the source, used for multi-factor authentication of the identifier and for decryption of the encrypted information of interest,

    Said spatio-temporal encryption method comprising the following steps at the creation of the container:

    - Identification of the information source (106),
    - Generation of spatio-temporal encryption keys from GNSS georeferencing (108),
    - Encryption of the information of interest from the generated spatio-temporal keys (110),
    - Capture of the GNSS fingerprint used to transport and protect the spatio-temporal keys to be transmitted (112),

    Said spatio-temporal encryption method comprising the following steps at the reading of the container:

    - Extraction of spatio-temporal keys from the GNSS fingerprint (114),
    - Multi-factor authentication of the GNSS position and time from the spatio-temporal keys extracted from the GNSS fingerprint (116),
    - Decryption of the information of interest from the extracted spatio-temporal keys (118),
    - Evaluation of cyber risk in case of failure to read the container (120).

2. Method according to Claim 1, for encrypting the information of interest by combining the initial data encoded in binary [1,0] with at least one of the pseudo-random codes of the GNSS signals, referred to as PRN codes (Pseudo-Random Noise), tracked in reception at the instant to of creation of the encrypted message, for the chosen constellation and navigation service, said combination consisting in multiplying bit by bit the sequence of initial data of interest by the sequence of chips of the PRN code, periodic or aperiodic in nature, depending on the navigation service implemented in the method, said multiplication being **characterized in that**:

    - It is applied to the input data of interest encoded in binary after their conversion to #BPSK [+1,-1] coding (Binary Phase Keying), the local PRN code chips already being #BPSK coded,
    - The applied local PRN codes, specific to the navigation service used, are each delayed before multiplication by an integer number of chips closest to the instantaneous code phase of the corresponding received satellite signal (115), sampled at the instant to, shifted by a hidden random value, referred to as random phase offset (114),

- The different local PRN codes are applied, according to a cyclic or random sequencing, referred to as interleaving, in temporal slices of the same length over the entire sequence of data of interest,

Said encryption method comprising the following steps for the constitution of the encrypted data sequence:

- Selection of the constellation and navigation service according to user privileges,
- Identification of the GNSS satellites tracked at the instant to (112),
- Capture of periodic or aperiodic code phases, according to the chosen navigation service and the satellites tracked at the instant to (113), congruent modulo a duration sufficient to protect against direct acquisition of the associated pseudo-distances, for example 100 ms,
- Addition of the random phase offset (114) calculated jointly with the position noise, initialized on a rounding of the creation date and with a secret standard deviation known only to authorized users. The code phase offset is determined as a proportion of the existing differences between the instantaneous code phases tracked by the receiver and the median noised code phases obtained by inverse transformation PVT$^{-1}$ (171) of the transmitted noised position, the proportionality coefficient resulting from the same uniformly distributed random draw on $]0,1[$ as that performed by the noise generator for position noising,
- Reading of the binary data to be encrypted at the chosen data recording or transmission rate (123),
- Conversion of binary data into #BPSK coded data (125),
- Sequencing of the local satellite codes to be applied in successive temporal slices to perform encryption by the satellite codes according to said interleaving defined to contribute to data encryption (127),
- For each temporal slice, alignment of the origin of the generation of code sequences as a function of the code phases captured at the instant to and the random phase offset (128),
- Bit-by-bit multiplication at the chosen recording or transmission rate between the #BPSK coded data and the #BPSK coded code chips (126),
- Conversion of the multiplication outputs into binary coded data (129).

3. Method according to Claim 1, referred to as authentication of the origin of said container, implementing the transmitted noised GNSS position and date as well as the GNSS fingerprint representative of the characteristics of the GNSS signal received at the time of creation and added to the container, said GNSS fingerprint consisting of a slice (143) of the digitized GNSS signal at the output of the GNSS RF reception stage (142), filtered in a GNSS signal reception band (141) compatible at least with the frequency spreading containing the code of the navigation service implemented,
Said authentication method being **characterized in that**:

- The code phases of the visible GNSS signals are extracted from the fingerprint, consisting of a short slice of the GNSS signal of a few milliseconds, captured at the time of creation of the encrypted message (151),
- The code phases extracted from the fingerprint are used to estimate the differences between the position and the date of capture of the fingerprint, estimated from the fingerprint, and the noised position and the rounded creation date of the message provided in the container identifier, the ephemerides of the satellites being known data provided elsewhere by the GNSS system (156),
- The position and time differences calculated from the code phases extracted from the fingerprint (154) and the code phases corresponding to the noised position and the rounded date transmitted in the container (152), after correction of the noise voluntarily added during transmission, with a known draw law to the recipient, are evaluated in relation to the distribution of GNSS errors depending on the standard precision of the GNSS navigation service implemented, the quantization of the rounding of the creation date, and the duration of the fingerprint (157).

4. [Method according to Claims 1 and 3, for extracting the code phases used for authentication, from the GNSS fingerprint captured at the date of creation of the encrypted message, consisting of a direct acquisition (52), referred to as snapshot, of the codes of the visible satellites over the sole length of the fingerprint, aided by the code phases corresponding to the non-noised position and the rounded GNSS time (51), obtained after suppression of the noise (53) added to the position transmitted in the container, the noise draw law being known both to the sender and the recipient, said snapshot acquisition being **characterized in that**:

- The position of the satellites corresponding to the date of creation of the message, provided in rounded GNSS time, transmitted in the container, is calculated from the known ephemerides of the GNSS satellites for the navigation service implemented in reception,

- The acquisition of the code phases of the GNSS fingerprint is carried out over a GNSS time exploration range framing the expected code phases of the visible satellites, the start date of the fingerprint being initialized on the actual creation time of the message,

- The expected code phases used for initialization are calculated from the non-noised position, obtained after correction of the noised position from the container, and the positions of the satellites calculated for the rounded GNSS time of creation of the message from the container (51):

> ▪ The model for generating the position noise randomness used during writing being known to the recipient, the noised position provided by the container is corrected for the values of the position randomness generated from the same generation seed as during writing, initialized on the rounded GNSS time of creation of the message (53),

- The acquisition of the phase of each of the codes of the GNSS fingerprint is carried out by scanning the delay applied to the local code (163) in the exploration range (168) as a function of the residual standard deviation of phase noise and the positioning inaccuracy of the satellites, to search for the date of best correlation (167) between the code of the fingerprint signal (162) and the synchronized local code, in a delay range located around the delay corresponding to the expected code phase (160).

5. Method according to Claims 1 and 2, for decrypting the encrypted data of interest by the local codes aligned on the non-noised code phase of the signals received at the time of creation of the message, shifted by a random phase offset, obtained by generating the position noise at the creation of the encrypted message, **characterized in that**:

- The constellation and navigation service to be used for decrypting the data of interest are identical to those used for encryption,

- The extraction of non-noised code phases is carried out from the GNSS fingerprint captured at the instant to of creation of the encrypted message, by snapshot acquisition of the codes (174), aided by the median code phases derived after correction of the randomness of the noised GNSS position transmitted in the container,

- The phase offsets are calculated (173) for the rounded GNSS date of creation of the message, as a proportion of the differences between the code phases of the non-noised estimated position extracted from the fingerprint and the median code phases obtained by inverse transformation PVT$^{-1}$ (171) of the received noised GNSS position, the proportionality factor being obtained simultaneously with the calculation of the position noise randomness (1711) reconstituted by implementing, identically to the transmission, the random noise generation algorithm parameterized by its standard deviation, kept secret and known to the recipient, as well as the ephemerides of the satellites of the GNSS satellite constellation,

- The phase offsets are added (175) to the code phases extracted from the fingerprint, to adjust the delays of the local codes by an integer number of chips (176) closest to the code phases applied to encrypt the message, at the instant to of creation of the container,

Said decryption method comprising the following steps for the constitution of the decrypted data sequence:

- Selection of the constellation and navigation service used for encryption,
- Identification of the GNSS satellites tracked at the instant to,
- Correction of the bias of the transmitted noised position, by implementing the noise generator with the same initialization characteristics on the rounded GNSS time as during the creation of the container,
- Calculation of the median code phases from the corrected position for initialization of the local search for the instantaneous code phases from the signal fingerprint,
- Extraction from the fingerprint of the periodic or aperiodic code phases, according to the chosen navigation service, of the satellites tracked at the instant to,
- Calculation of the phase offsets as a proportion of the differences between the code phases of the non-noised estimated position and the median code phases obtained by inverse transformation PVT$^{-1}$ of the noised position transmitted in the container identifier for the rounded creation date of the message,
- Reading of the binary data to be decrypted at the chosen data recording or transmission rate,
- Conversion of binary data into #BPSK coded data,
- Sequencing according to the interleaving of the local satellite codes to be applied in successive temporal slices to perform decryption by the encrypted satellite codes following said interleaving,

- For each temporal slice, alignment of the origin of the generation of code sequences as a function of the periodic or aperiodic code phases extracted from the fingerprint and the reconstituted random phase offset,

- Bit-by-bit multiplication, at the chosen recording or transmission rate, between the #BPSK coded data and the #BPSK coded code chips,

- Conversion of the multiplication outputs into binary coded data.

6. Method according to Claims 1, 3, and 4, for adjusting the level of security of authentication and encryption by selecting the GNSS constellation and navigation service, robust against signal spoofing, said security adjustment method consisting in implementing, for accredited users or authorities, an a priori encrypted GNSS navigation service not accessible to the perceived threat, the method being **characterized in that**:

    - The GNSS fingerprint, when captured in a wide band, captures the signals of all constellations and all associated navigation services,

    - The constellation used for encryption-decryption and authentication (158) is chosen according to the geographical availability of the constellation and the approval provided by the authority guaranteeing the use of GNSS navigation services,

    - The security check (157), which requires the access keys to the encrypted GNSS signals, can be carried out directly by the user if they are accredited or by a mandated authority to carry out the confirmation.

7. Method according to Claims 1 to 6, for validating the decryption of the data of interest after decryption, and for evaluating the risk of cyber attack in case of failure (611), **characterized in that**:

    - A failure of fingerprint authentication (181) implies falsification, by intrusion into the container, of the position or creation time transmitted in the container, inconsistent with the fingerprint,

    - In case of successful authentication, a failure to decrypt the data of interest (182) implies falsification, by intrusion into the container, of the position and creation time consistent with the fingerprint, inconsistent with the interleaving and the encryption code phases of the data,

    - In case of successful decryption of the data of interest, a test referred to as Geofencing (183), consisting in verifying, when the information is available elsewhere, that the expected position and creation time correspond to the identification information available in the container. A failure of the Geofencing verification is indicative of spoofing of the GNSS signals at reception on the antenna, for example by superimposition of signals created by simulation of constellation signals (accessible for open navigation services),

    - Finally, an ultimate verification (184) consists in checking the authentication of the fingerprint based on regulated encrypted GNSS signals, via an accredited authority having the GNSS signal encryption keys. A failure of authentication by the encrypted GNSS signals is indicative of a targeted attack on the area of implementation of the secured recordings or communications.

8. Device for encryption and decryption guaranteeing the origin and integrity of information of interest for the purpose of recording or transmission, implementing the methods of Claims 1 to 7, **characterized in that** it comprises:

    - A GNSS reception antenna (191),

    - A single or multi-constellation GNSS receiver capable of processing one or more navigation services in parallel and of capturing a slice of RF signal, referred to as snapshot, upon reception of an external command, and of providing the code phases of the satellites visible at that instant (192),

    - For the creation of the protected container, a processing module (193) and software interfaced with the GNSS receiver (195), configured for encryption, capable of performing the container identification and encryption treatments of the information of interest to be recorded or transmitted,

    - For reading the container, a processing module (204) and software, configured for decryption (205), capable of performing the container authentication and decryption treatments of the recorded or transmitted information of interest.

9. Encryption and decryption device for the purpose of recording or transmission according to the preceding Claim 8, for which the GNSS constellation used is the Galileo constellation, and the navigation services implemented use the signals of the open service, referred to as OS, and the encrypted signals of the commercial service, referred to as CS, or the regulated service, referred to as PRS.

10. Method for authenticating the information of interest according to Claims 3 and 4, at the service of an accredited third-party authority, making it possible to validate the origin and content of the data of interest with at least one additional level of security compared to that provided by a device based on periodic open signals, **characterized in that** the authentication provided by the service relies respectively on:

- The pilot channels of the open GNSS signals with a period of 100 ms,
- The encrypted CS or PRS signals of the Galileo constellation, if the nominal service only implements open GNSS signals,
- The encrypted PRS signals of the Galileo constellation, if the nominal service only implements commercial GNSS signals, such as Galileo CS,
- The signals of constellations different from the constellation implemented by the nominal service, if it only implements one constellation.

[Fig.1]

| | Phase d'initialisation |
| 106 | |
| 108 | |
| 110 | Phase de chiffrement de l'information et de caractérisation multi-facteurs de la source |
| 112 | |
| 114 | |
| 116 | Phase d'authentification multi-facteurs de la source et de déchiffrement de l'information |
| 118 | |
| 120 | Phase d'évaluation du risque cyber |

# [Fig.2]

**[Fig.3]**

Phases de codes GNSS
non bruitées ($\varphi_{c\_nb}$)$_{GNSS}$
(clé de chiffrage)

31

Données d'intérêt à chiffrer → Conditionnement codes PRN et chiffrage → Données chiffrées

Codes PRN GNSS
(ouverts ou cryptés)

Séquencement codes
GNSS
(entrelacs)

[Fig.4]

Germe aléas
(temps GNSS arrondi E(t₀))                    / 43

                                                    / 44

Ecart-type souhaité          Générateur de bruit
                    / 42
de l'erreur (secret)          de position XYZ              Ephémérides      Modèles de
                              aléatoire                    satellites       Correction GNSS
                                                            / 46            / 47

                    / 40                      / 42                                    / 44
Position GNSS              / 41    Position bruitée
estimée à t0                      À E(t₀)              Transformation
                              ⊕                       mathématique
(P&T)₀                            (P&T)ᵦ              inverse (PVT⁻¹) à E(t₀)

                    / 49                                (φ_c_b)     Phases de codes      / 45
                                                                    de la position bruitée
Récepteur GNSS
                                                      Calcul de l'offset de       / 48
                                                      phase de code
                              Phases de codes
                              estimées à t₀    / 41                                           / 410
                              (φ_c_nb)GNSS                           Offsets de phase de code
Synchro évènement (t₀)    / 40                                       à l'écriture

[Fig.5]

Ecart-type de l'erreur (secret)

Temps GNSS arrondi E(t$_0$)
transmis (germe aléas )

Générateur de bruit
de position XYZ
aléatoire
/ 53

Ephémérides
Satellites/ E(t0)

Modèles de
Correction GNSS

Position bruitée transmise

(P&T)$_b$

Position débruitée

(P&T)$_0$

Transformation
mathématique
inverse (PVT$^{-1}$) à E(t$_0$)
/ 51

Phases de codes médianes
non bruitées
($\widehat{\varphi_{c-n}}$ )

Empreinte GNSS à t0
transmise

Acquisition
snapshot aidée
/ 52

($\varphi_{c\_nb}$)

/ 54

Phases de codes mesurées
non bruitée (clés sans offset)

[Fig.6]

[Fig.7]

[Fig.8]

EP 4 485 843 B1

Séquence de chips B de code périodique d'un signal GNSS (i)
sur base de temps GNSS, à la réception,

Cryptage au rythme d'écriture des données,
à partir de la date $t_0$ , des bits de données Mb
par les chips de codes B du satellite (i)
décalés de la phase de code en chip entier reçu à t0

Cadence de cryptage

[Fig.9]

# [Fig.10]

**101** Réception du signal RF GNSS

**102** Poursuite des phases de code et porteuses des signaux satellites visibles

Instant de création du message →

**103** Capture des phases de code satellites à l'instant de création du message

Synchronisation pour capture de l'empreinte GNSS ← TMP

$\{\varphi_{nb}(t_0)\}$

**104** Calcul de la position et du temps de réception précis non bruité à l'instant de création du message

Germe $E(t_0)$

$P(t_0)$, $T(t_0)$

Temps $T(t_0)$ et position $P(t_0)$ précis à l'instant de création du conteneur

Phases de codes bruitées

$\{\varphi_b(E(t_0))\}$

**106** Bruitage des phases de code

**105** Calcul de la position bruitée au temps GNSS arrondi de création du message

$P_b(t_0)$

$P_b(t_0)$

**107** Complément de l'identification de la source avec la position bruitée et la date arrondie de création du message

ID de la source →

$(ID, P_b(t_0), E(t_0))$

Identifiant de la source d'information utile à $t_0$

[Fig.11]

**[Fig.12]**

[Fig.13]

Instant $t_0$ de création
du conteneur à archiver

Cadence d'enregistrement                    124
des données à crypter

Clés de cryptage                    Constellation et Service signal
spatio-temporelles à $t_0$

$\{\tau_{Bi}(t_0)\}$

121

Informations d'intérêt
à transmettre

Génération chips de code local                    128
décalé codées BPSK

122                    123                    125                    126                    129

Codage en binaire
de la séquence de
données

Lecture de la séquence de
données binaires

Conversion Binaire
/BPSK

Conversion
BPSK/binaire

Synchro bits données binaires

Informations
d'intérêt chiffrée
à enregistrer

Entrelat de codage
satellites

Commutation codes satellites                    127

ID code local satellite sélectionné

## [Fig.14]

[Fig.15]

Sélection
constellation et Service signal

Ephémérides satellites — 158

Calcul des pseudo-distances
correspondant à la position & date à $t_0$
transmises — 152

Empreinte GNSS ($t_0$, T) — 151

Phases de code attendues

Acquisition snapshot
des phases de code — 153

Position et date GNSS à $t_0$ transmises — 150

$\{\widehat{\varphi_i}(t_0)\}$

Aide à l'acquisition

Estimation pseudo-distances à $t_0$ — 154

Pseudo-distances re-calculées

Calcul des écarts de pseudo- distance — 155

Calcul de l'erreur de position/ erreur
standard de position — 156

OK          Test erreur position — 157          NOK

**[Fig.16]**

Position et temps GNSS à $t_0$ /‾ 161

Empreinte GNSS
échantillonnée à $T_{ech}$ /‾ 162

/‾ 164
Détermination de l'époque de
transition de données GNSS, $t_D$ ──── Ephémérides satellites

/‾ 160
Phase de code attendue à t0

/‾ 163
Génération du code local GNSS décalés,
échantillonnés à $T_{ech}$

⊗

/‾ 165
Intégration cohérente par partie
$[t_0, t_D]$ et $[t_D, t_E]$

/‾ 166
Intégration non cohérente des parties
$[t_0, t_D]$ et $[t_D, t_E]$

/‾ 168
Exploration
des phases de code

/‾ 167
Recherche maximum de corrélation

Ecart de phase de code $\delta\varphi_c$ estimé
sur l'empreinte, à $t_0$

[Fig.17]

[Fig.18]

[Fig.19]

Antenne GNSS

Instant de création du conteneur

194
Informations d'intérêt
à enregistrer ou à transmettre

191

192

195

Sélection de la constellation GNSS
et du service signal

Date GNSS de création du conteneur

Position GNSS de création du conteneur

Récepteur GNSS

Phases de codes satellites

Dispositif d'authentification et de
cryptage

Clés de décryptage du signal
Selon accréditation

193

Empreinte signal GNSS

196

Générateur de codes PRN
satellites GNSS

Codes PRNS satellites GNSS

Cryptage par codes PRN

Requêtes codes PRN

197
Conteneur crypté de l'information
à enregistrer ou à transmettre

[Fig.20]

Antenne GNSS

200

Conteneur crypté de l'information
enregistrée ou transmise
203

201

Sélection de la constellation GNSS
et du service signal

Clés de décryptage du signal
Selon accréditation

Récepteur GNSS

204

Dispositif de réception pour
authentification et décryptage

202

Générateur de codes PRN
satellites GNSS

Codes PRNS satellites GNSS

205

Décryptage par codes PRN

Requêtes codes PRN

206

Informations d'intérêt
authentifiée et décryptée

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015365824 A1, Gustafson Bo
- EP 2674779 A, Marc Revol & Al
- US 2014368380 A1, Revol Marc & Al
- EP 2790035 A, Marc Revol

**Littérature non-brevet citée dans la description**

- **ALEXANDER RUGAMER** ; **MANUEL STAHL** ; **IVANA LUKCIN** ; **GUNTER ROHMER**. Privacy Protected Localization and Authentication of Georeferenced Measurements using Galileo PRS. *Proceedings of IEEE/ION PLANS*, 05 May 2014
- **MARC REVOL**. Distant positioning for GNSS securing. *Proceeding de ENC 2015*, 08 April 2015
- Compressing a wide band radio-navigation signal and method for calculating the correlation function for distant positioning. **MARC REVOL**. Navitech 2016 - Proceeding. ESA/ESTEC, December 2016, 02-14, 16
- **MARC REVOL**. Distant positioning for GNSS securing. *Proceeding de ENC 2015- session 08*, 08 April 2015
- Compressing a wide band radio-navigation signal and method for calculating the correlation function for distant positioning. **MARC REVOL**. Navitech 2016 - Proceeding. ESA/ESTEC, 16 December 2016, 02-14